# EUROPÄISCHE PATENTSCHRIFT

(11) **EP 2 224 175 B1**
(45) Veröffentlichungstag und Bekanntmachung des Hinweises auf die Patenterteilung: **01.11.2017**
(21) Anmeldenummer: 09002810.1
(22) Anmeldetag: 27.02.2009
(51) Int. Cl.: F24D 11/00, F24D 19/10

(54) **Regelungssystem zur Regelung von Thermosolaranlagen sowie Verfahren**
Control system for controlling thermosolar plants and method
Système de régulation pour la régulation d'installations thermiques solaires et procédé

(43) Veröffentlichungstag der Anmeldung: 01.09.2010
(73) Patentinhaber: Hauser, Oswald, 85221 Dachau OT Pullhausen (DE)
(72) Erfinder: Rabich, Bernd, 83088 Kiefersfelden (DE)
(74) Vertreter: Szaunig, Bernd

(56) Entgegenhaltungen:
- EP-A1- 1 437 819
- EP-A1- 1 564 408
- EP-A1- 1 788 314
- WO-A2-01/92789
- AT-B- 410 988
- DE-A1- 19 855 390
- DE-U1-202008 010 401
- US-A- 5 259 731

## Beschreibung

Die Erfindung betrifft ein Verfahren zur Regelung von Thermosolaranlagen sowie ein Regelungssystem zur Regelung solcher Anlagen.

### Stand der Technik

Aus der EP 1 788 314 ist ein Verfahren sowie ein Regelungssystem nach dem Oberbegriff der Ansprüche 1 und 10 bekannt.

Pumpengruppen mit externer Steuerung bzw. Regelung gibt es mit mehr oder weniger aufwendigen Verschaltungen von vielen Anbietern. Betrachten wir die Systeme jedoch genauer, dann muss man sagen, dass auch die Regelungssysteme vom Grund her Steuerungen sind, da das Hauptregelungsglied, die Umwälzpumpe, nur an- bzw. ausgeschaltet, also gesteuert wird. In wenigen Fällen kann die Pumpe in wenigen Stufen (Leistungsstufen) umgeschaltet werden, also ebenfalls gesteuert. Meist muss diese Umschaltung auch noch von Hand erfolgen. Geht man von dieser Betrachtungsweise aus, sind alle am Markt befindlichen Systeme Steuerungen mit vereinzelten Regelungsfunktionen, die zwar schon recht effizient arbeiten können, aber das mögliche Optimum nicht erreichen.

Als weiterer wesendlicher Punkt ist zu nennen, dass Asynchronpumpen verwendet werden. Diese lassen sich nur mit hohem technischen Aufwand begrenzt regeln. Dies kann nur mit Frequenzumrichtung oder Pulspaketsteuerung erfolgen. Ein weiterer Nachteil der Asynchronpumpe ist, dass sie bei Erwärmung ihre elektrische Leistungsaufnahme zu wesentlich höheren Werten verändern können, was zur Folge hat, das ein höherer Energiebedarf nötig wird und damit die Effizienz dieses Bauteils verloren geht. Weiterhin ist von Nachteil, das die Asynchronpumpen beschädigt werden können, wenn sie über eine längere Zeit mit verschlossenem Zu- und Ablauf betrieben werden.

Zusätzlich werden für Heizungsunterstützende Systeme Wärmemengenmesser gefordert. Diese müssen bei den vorhandenen Systemen zusätzlich eingebaut und verdrahtet werden. Daraus folgt, dass der Montageaufwand und damit die Kosten erheblich steigen. Ihre Nutzung für die Regelung der Systeme ist meistens gar nicht möglich oder nur mit sehr hohem technischen Aufwand zu realisieren. Zu dem können die meisten Wärmemengenmesser den eventuell vorhandenen Frostschutzzusatz (Glykol) nicht beachten und die gewonnenen Messergebnisse müssen mittels einer Tabelle aufwendig nachbearbeitet werden um die Messwerte zu korrigieren. Damit entfällt auch eine Nutzung für die Regelung.

Die meisten Thermosolaranlagen entnehmen ihren Start von der Temperatur der Solarfläche gekoppelt mit mehr oder weniger aufwendigen Zeitschaltungen. Dies bedeutet für den Monteur, dass er die Verdrahtung dieses Sensors selbst vornehmen muss oder durch einen zusätzlich angeforderten Elektriker vornehmen lassen muss. Das heißt aber auch, dass ein nicht zu unterschätzender Mehraufwand bei der Installation entsteht. Das es auch anders geht ist aus verschiedenen anderen bereits erteilten Patenten ersichtlich. Beispielhaft ist das Patent AT 410988 B zu nennen. Hier wird ein physikalischer Effekt benutzt, der ein Zukunftspotential in der Thermosolarregelung hat. In einem geschlossenen Kreislauf wird ein Medium erwärmt. Durch diesen Wärmeeintrag dehnt sich das Medium aus, was eine Druckerhöhung bewirkt. Dieser Effekt tritt auch bei Solaranlagen auf, nur nicht so stark. Vorteil dieses Effektes ist, dass die Druckerhöhung im gesamten System gleich ist und daraus folgt, dass diese Druckerhöhung an jeder beliebigen Stelle im System gemessen werden kann. Mit geeigneten Messgeräten bzw. Sensoren kann man nun diese Druckerhöhung auswerten und als Regelparameter nutzen. Die Systembeschreibung in dem Patent AT 410988 B besitzt aber auch Nachteile, die es zu verbessern gilt. Da in diesem System das gesamte Volumen der Solaranlage inklusive der Speicher zur Druckerhöhung genutzt wird, ist die Druckänderung sehr langsam und extrem klein. Die Größe der Druckerhöhung ist abhängig vom Gesamtvolumen. Je größer das Volumen ist, je kleiner wird die Druckänderung und damit ist eine einheitliche Detektierung dieser Systemgröße für die unterschiedlichsten Auslegungen und Volumen von Thermosolaranlagen sehr problematisch.

Ein weiterer Nachteil ist, dass bei jedem Startversuch ein Wärmeaustrag aus dem Speicher zum Solarpaneel erfolgt. Dies fällt im Sommer nicht so sehr auf, aber im Winter, wo jedes Watt Energie zählt, ist dieser Nachteil hervor stechend. Speziell bei mehrfachen Startversuchen, die auf die ungünstigen Temperaturbedingungen zurück zu führen sind.

Jedes Watt Wärmeenergie das zur Solarfläche zurück geführt wird, ist für die effektive Nutzung absolut verloren und darum möglichst zu vermeiden. Außer es dient zum Erhalt der Funktionsfähigkeit, z.B. als Frostschutz oder Überhitzungsschutz der Speicher.

Bei den verwendeten Motorventilen sieht es nicht anders aus. Sie sind groß und haben eine mehr oder weniger hohe Leistungsaufnahme. Je nachdem wie sie aufgebaut sind, benötigen sie eine Versorgungsspannung von 24 Vac oder 230 Vac. Leistungsaufnahmen von 8 Watt und höher sind keine Seltenheit. Die Umschaltzeit der Ventile wirkt sich unmittelbar auf die Leistungsaufnahme aus. Nur mit hohem mechanischem Aufwand für die Untersetzung der Motordrehzahl kann die Leistungsaufnahme begrenzt werden, was sich wiederum auf die Umschaltzeit Einfluss hat. Kurze Umschaltzeiten benötigen stärkere Motoren und damit eine höhere elektrische Leistungsaufnahme.

Speziell bei Ventilen, die mit einer mechanischen Rückstellung versehen sind, erhöht sich die Leistungsaufnahme durch die Energie, die benötigt wird, die zum spannen und halten einer Feder benötigt wird, damit das Ventil im spannungslosem Zustand von dieser Feder in seine Grundposition zurück geführt werden kann.

Ein eigenständiges Arbeiten dieser Ventile ist nicht möglich, da sie keine eigene Elektronik besitzen. Nachteilig ist demzufolge auch, dass bei Nachrüstung von Ventilen, z.B. bei Speichererweiterungen, oftmals kein Steuerausgang an der Elektronik mehr frei ist. Damit wird eine aufwendige Zusatzelektronik nötig.

### Grundlagen für die Regelung von Thermosolaranlagen

Um die komplexen Zusammenhänge einer Regelung eines Solarsystems abzuschätzen ist es notwendig, vor der detaillierten Beschreibung einige Vereinbarungen und Erläuterungen aufzuführen, die nur mittelbar aber trotzdem Entscheidend für die Effizienz des Regelungssystems sind. Dies betrifft speziell die Verwendung der Begriffe Vorlauf und Rücklauf und Erläuterungen bezüglich der zu verwendenden Solarkollektoren und Speicher, auf die in der eigentlichen Beschreibung nicht weiter eingegangen wird. Es werden dann nur noch die allgemeinen Begriffe Solarfläche, Boiler oder Speicher verwendet.

Zum besseren Verständnis ist es erforderlich, die Begriffe Vorlauf und Rücklauf eindeutig zu definieren, da unterschiedliche Betrachtungsweisen vorliegen. Um diesem Umstand Rechnung zu tragen und die Betrachtungsweise wesendlich zu vereinfachen und gleichzeitig zu verallgemeinern wird definiert:

Alle Leitungen die zum Transport von Nutzenergie angereichertem Medium dienen bzw. vorgesehen sind, als Vorlauf und diejenigen Leitungen, die Medium transportieren dessen Nutzenergie abgereichert (verbraucht) wurde, als Rücklauf bezeichnet werden.

Diese energetische Betrachtung zeigt immer die Richtung des Energieflusses der zu nutzenden Energie von der Quelle zum Verbraucher, unabhängig um welche spezielle Energieform es sich handelt.

Für die Funktion des Systems wird ein Trägermedium für den Transport der erzeugten Energie benutzt. Dies können Wasser, Wasser - Glykolgemische, Öle oder andere geeignete Flüssigkeiten oder Gase sein. Im weiteren Verlauf dieser Beschreibung wird nur noch vom Medium oder Trägermedium gesprochen.

An die Solarkollektoren werden keine besonderen Anforderungen gestellt. Es sind alle auf dem Markt befindlichen Typen für dieses Regelungssystem geeignet. Die Größe der verwendeten Solarfläche ist abhängig von der Nutzung des Systems und ist auf die jeweiligen örtlichen und meteorologischen Bedingungen abzustimmen. Empfehlenswert sind kombinierte Thermosolar und Elektrovoltaik Paneele. Damit ist es möglich, Netzspannungsunabhängige Solare Heizungssysteme zu konzipieren und dies erhöht zusätzlich die Effektivität. Außerdem ist es möglich, dass nicht benötigte elektrische Energie ins Stromnetz zurück gespeist werden kann.

Auf die Auswahl und Dimensionierung der Speicher sollte jedoch größte Sorgfalt gelegt werden. Es ist hierbei entscheidend, für welchen Zweck die Speicher benutzt werden. Zumindest ein auf das Nutzungsverhalten großzügig ausgelegter Boiler zur Warmwasserbereitung ist unbedingt erforderlich und ein Zusatzspeicher zum nachpuffern ist sehr zu empfehlen. Bei der Heizungsunterstützung müssen noch zusätzliche Speicher berücksichtigt werden. Vorteilhaft ist, wenn Zusatzspeicher nicht als eine Einheit angeboten werden, sondern zumindest in zwei eigenständigen Einheiten zur Verfügung stehen. Die gesamt Größe des Speichers sollte optimal den gesamten Energieertrag der Solarfläche aufnehmen können, der Anfällt, wenn mindestens drei Tage hintereinander volle Sonnenbestrahlung und damit maximaler Energieertrag ansteht. Dies ist abhängig von den regionalen Bedingungen und den damit zu erwartenden Sonnenscheintagen. Darüber hinaus hängt die Speichergröße auch noch von dem Verwendungszweck als Kurzeit- oder Langzeitspeicher ab. Langzeitspeicher sollten immer Mehrteilig aufgebaut und großzügig dimensioniert werden. Wird ein Speicherbereich des Langzeitspeichers als Kurzzeitspeicher benutzt und wird dieser Speicherbereich generell als Pufferspeicher zum nachladen des Boilers und zum Betreib der Heizungsanlage genutzt, hängt dessen Größe von der Leistungsfähigkeit der Zusatzheizung und des zu erwartenden Wärmebedarfs direkt ab. Größere Speicher reduzieren die Startzyklen der Zusatzheizung und erhöhen damit die Effizienz dieser Heizsysteme. Zu große Speicher reduzieren den Solarenertrag, da bereits geladene Speicher für die Aufnahme von solarer Energie nicht mehr zur Verfügung stehen. Bei all diesen Speichern ist die Ausführung untergeordnet. Es können Flüssigkeitsspeicher, Erdspeicher, Solespeicher oder sogar der Baukörper als Speicher genutzt werden. Für alle weiteren Betrachtungen wird von einem optimierten Speichersystem ausgegangen.

Eine weitere Grundvoraussetzung ist, das der Kreislauf für die solare Energiegewinnung komplett von den Heizungskreisläufen getrennt ist. Der einzigste Berührungspunkt beider Systeme ist im Kurzzeitspeicher. Es ist dabei auf strickte Medientrennung zu achten. Das heißt, dass der Kurzzeitspeicher zwei Eingänge besitzen muss, die Energie in den Speicher bringen können, und einen Ausgang, mit dem die Energie aus dem Speicher entnommen werden kann. Damit kann die Zusatzheizung ausschließlich auf diesen Speicher arbeiten und die Heizkreise werden ausschließlich von diesem Speicher oder je nach Energieniveau von den anderen verfügbaren Speichern bedient. Mit dieser Trennung ist es möglich, jede beliebige Heizquelle als Zusatzheizung zu verwenden, so z.B. Brennwertkessel mit Öl oder Gas betrieb, Kamine mit Wassertasche, Pelletkessel und auch Erdwärmesysteme sind denkbar.

### Systembeschreibung

Der grundlegende Aufbau des Regelsystems ist ein zwei Kreissystem. Bei dem der zweite Kreislauf zum ersten Kreislauf zugeschaltet werden kann. Dies ist erforderlich, damit die Solarfläche von den Speichern komplett getrennt werden kann, um das austragen von Wärmeenergie aus den Speichern zu der Solarfläche zu unterbinden. Mit dieser Aufteilung können diese Kreisläufe sinngemäß Solarkreislauf und Speicherkreislauf genannt werden. In der weiteren Betrachtung wird nun ausschließlich vom Solarkreis(lauf) bzw. vom Speicherkreis(lauf) gesprochen.

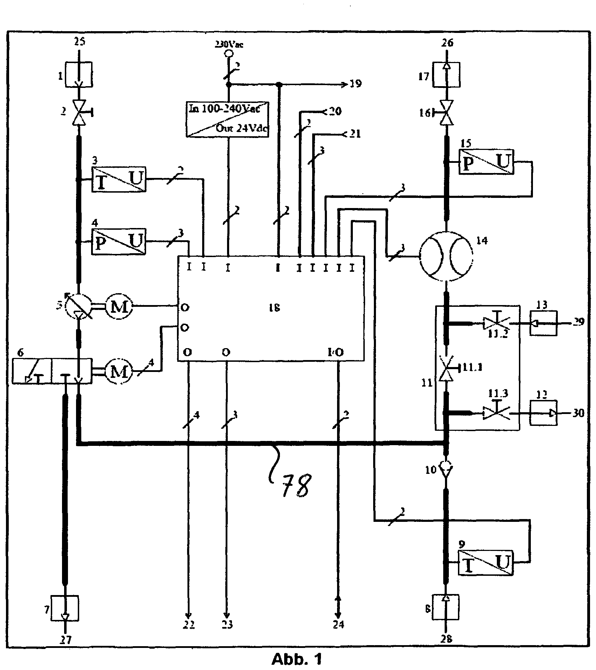

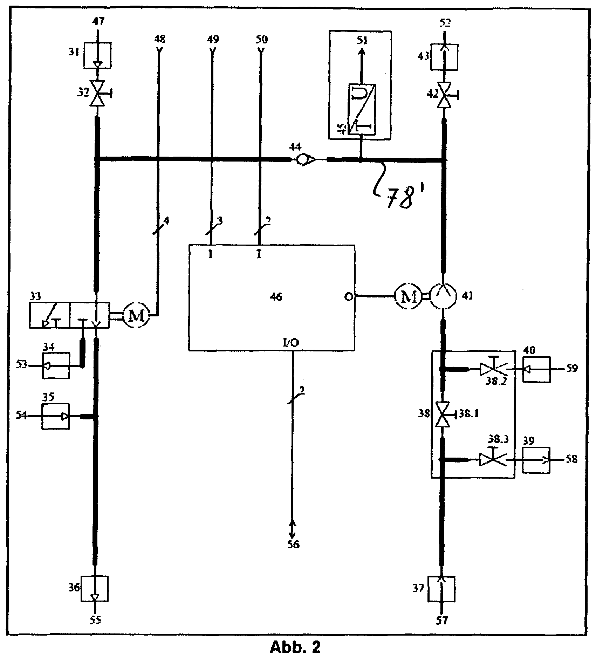

Entsprechend der Kreisläufe gibt es auch unterschiedliche Funktionseinheiten, nämlich die Solargruppe und die Speichergruppe. Die Solargruppe ist in allen Konfigurationsmöglichkeiten gleich aufgebaut, da sie den Kern des Systems bildet. Die hydraulische und elektrische Verschaltung ist in Bild 1 dargestellt. Die Speichergruppe kann bei Systemen, die nur für die Warmwasserbereitung dienen entfallen oder bei Systemen zur Heizungsunterstützung, je nach Bedarf, variieren und besteht im einfachsten Fall ausschließlich aus einem Umschaltventil. Je größer die Anlage aufgebaut wird und je mehr Speicher verwendet werden, erhöht sich der Aufwand für diese Gruppe. Für die Erläuterung dieser Baugruppe dienen die Bilder 2 bis 4.

Die Speicher werden in diesem System in einer Reihenschaltung angeordnet, das heißt, dass der Rücklauf vom ersten Speicher zum Vorlauf des zweiten Speichers wird und so weiter bis zum letzen Speicher im System. Grundsätzlich hat der Boiler oberste Priorität und wird deshalb als erster Speicher im System installiert. Im folgen der Kurzzeitspeicher und nachfolgend der oder die Langzeitspeicher. Jeder Speichertyp, kann durch ein Motorventil zu oder abgeschaltet werden, bis auf den letzten Speicher, für den kein Ventil vorgesehen werden muss. Es beeinflusst die Regelung aber nicht, wenn auch dieser ein Ventil erhält.

Der Grund für diese Anordnung ist, dass ein Speicher niemals die gesamte angebotene Energie aufnehmen kann. Begründet ist dies durch die Durchflussgeschwindigkeit des Mediums durch den Speicher und dem Wärmeübergangswiderstand zwischen Transport- und Speichermedium und dessen Energieniveau. Deshalb liegt die Rücklauftemperatur mindestens 3°C über der Temperatur des Speichermediums. In einem System, dass parallel verschaltet ist, wird diese nicht aufgenommene Energie wieder zur Solarfläche zurück geführt und kann damit zur Beladung andere Speicher nicht mehr genutzt werden. In einer Reihenschaltung dagegen wird diese nicht aufgenommene Energie nachfolgenden Speichern angeboten und durch diese aufgenommen. Der Ausnutzungsgrad der in der Solarfläche aufgenommenen Nutzenergie erhöht sich dadurch erheblich. Reicht diese Restenergie für einen folgenden Speicher nicht aus, da sein Energieniveau höher ist als die Angebotene, z.B. bei einem noch nicht entladenen Kurzzeitspeicher, wird dieser durch das vorgeschaltete Ventil gebrückt und der Weg des Vorlaufes wird direkt zum nächsten Speicher geschaltet.

Im folgenden Abschnitt sollen die Bestandteile der Funktionsgruppen im Einzelnen erläutert werden, bevor auf die direkte Regelung eingegangen wird.

### Bestandteile der Speichergruppe

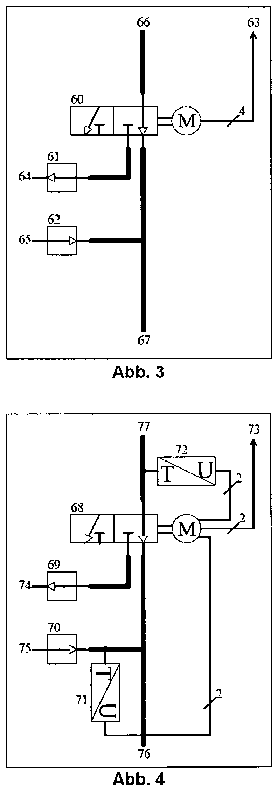

Diese Baugruppe wird, wie bereits oben erwähnt, nur benötigt, wenn sich zusätzlich zum Boiler mindestens ein weiterer Speicher im System befindet. Es ist dann nur eine Funktionseinheit nach Bild 3 oder Bild 4 vorzusehen.

Befindet sich der Boiler in unmittelbarer Nähe zur Solargruppe, dann wird ein Aufbau nach Bild 3 bevorzugt, da dieses Ventil direkt von der Regelelektronik (18) betätigt werden kann. Es besteht daher nur aus dem Motorventil selbst und den Anschlussfittings (61) und (62), an denen der Boiler angeschlossen wird. Ein benötigter Temperatursensor für die Boilertemperatur wird in diesem Fall direkt an die Regelelektronik (18) am Anschluss (20) angeschlossen. Diese Funktionseinheit wird direkt an der Solargruppe befestigt. Dazu wird die Leitung (66) mit der Leitung (27) von der Solargruppe fest verbunden. Die Leitung (67) wird als Vorlauf zum nächsten Speicher geführt. Elektrisch wird die Leitung (63) mit der Leitung (22) an der Regelelektronik (18) verbunden und über diese wird das Ventil mit Spannung versorgt und angesteuert.

Ist der Boiler oder ein anderer Speicher nicht in der Nähe der Solargruppe, wird an diesem Boiler oder Speicher eine Funktionsgruppe nach Bild 4 angeschlossen. Diese besteht aus dem Motorventil (68), den Anschlussfittings (69) und (70), an denen der Speicher angeschlossen wird, sowie den Temperatursensoren (71) und (72). Der Temperatursensor (72) befindet sich dann im Anschlussfitting des Eingangs vom Motorventil (68). Der Temperatursensor (71) wird im Boiler oder Speicher platziert. Ist dies nicht möglich oder zu aufwendig, kann dieser auch, wie im Bild 4 dargestellt, in der Rücklaufleitung vom Boiler oder Speicher platziert werden, jedoch in entsprechendem Abstand vor der Rückführung zum Vorlauf für eventuell nachfolgende Speicher, damit die Messergebnisse nicht zu stark beeinflusst werden. Die Grundlage für diese Platzierung ist, das bei durchflutetem Speicher die Rücklauftemperatur annähernd die ist, die im Speicher herrscht und damit für die Messung der Speichertemperatur herangezogen werden kann. Einschränkend ist zu bemerken, dass die Rücklauftemperatur abhängig ist von der Durchflussgeschwindigkeit. Es kann dadurch zum häufigeren umschalten des Ventils kommen.

Die Leitung (76) ist der Vorlauf für einen weiteren Speicher oder wird mit dem Rücklauf verbunden. Elektrisch ist nur eine Versorgungsspannung an Leitung (73) anzuschließen. Das Motorventil (68) arbeitet in dieser Konfiguration vollständig autark. Diese Konfiguration ist damit prädestiniert als Nachrüstmöglichkeit zu dienen, da keine Anforderungen an die räumliche Nähe zu Regel- oder Steuersystemen besteht.

Die bisher beschriebenen Funktionsgruppen des Speicherkreislaufs sind nur minimal Versionen oder Erweiterungsvorschläge. Eine verbesserte Funktion bietet die Speichergruppe nach Bild 2. Die Abmaße sind so gestaltet, das diese Baugruppe direkt an die Solargruppe geschraubt werden kann.

Die Baugruppe besteht im Vorlauf aus dem Anschlussfitting (31) für die Verbindung mit der Solargruppe, dem handbetätigten Absperrventil (32), einem Anschlussfitting für die Verbindung zum Rückschlagventil (44), dem Motorventil (33) (Boilerventil) mit den Anschlussfittings für den Boiler sowie den Anschlussfitting zu den folgenden Speichern. Im Rücklauf besteht diese Gruppe aus dem Anschlussfitting (37) von den Speichern, einer Spülarmatur (38) mit den integrierten Absperrventilen (38.1), (38.2) und (38.3). Einer Synchronpumpe (41) mit integrierter Regelelektronik (46), dem Rückschlagventil (44) mit einer Anschlussmöglichkeit für einen optionalen Temperatursensor (45) und einem Fitting zum Anschluss der Verbindung zum Vorlauf, dem Absperrventil (42) und den Anschlussfitting (43) für die Verbindung mit der Solargruppe. Die Spannungsversorgung sowie die Regelung der Synchronpumpe (41) und die Steuerung des Motorventils (33) erfolgen durch die Solargruppe nach Bild 1. Die elektrische Verbindung des Motorventils (33) erfolgt durch den Zusammenschluss der 4-Drahtleitung (48) mit der komplementären Leitung (22) im Bild 1. Die Synchronpumpe erhält ihre interne Versorgungsspannung und die Regelsignale über die 3-Drahtleitung (49), die an Leitung (23), Bild1, in der Solargruppe angeschlossen werden muss. Die Netzspannungsversorgung der Synchronpumpe (41) erfolgt über die Leitung (50), die mit der Leitung (19) in der Solargruppe verschaltet wird. Alle elektrischen Verbindungen werden mit Steckverbindungen realisiert, die ein vertauschen der Leitungen unmöglich machen.

Für eine digitale Kommunikation und der Möglichkeit für Softwareupdates ist die Synchronpumpe mit einer RS485-Schnittstelle (56) ausgerüstet.

Werden zusätzliche Motorventile benötigt, so erfolgt diese Erweiterung ausschließlich durch Funktionsgruppen nach Bild 4.

### Bestandteile der Solargruppe

Der Vorlauf der Solargruppe besteht aus dem Anschlussfitting (1) der einen Anschluss für einen Ausgleichsbehälter integriert hat, einem Absperrventil (2) mit dem Temperatursensor Vorlauf (3) und dem Drucksensor Vorlauf (4), der Synchronpumpe (5) mit der im Pumpengehäuse integrierten Regelelektronik (18), dem Motorventil (6) (Solarventil), das einen Anschlussfitting (7) enthält und eine Verbindungsleitung zum Rücklauf.

Der Rücklauf besteht aus dem Rückschlagventil (10) mit integriertem Anschlussfitting (8) und dem Temperatursensor (9) sowie dem Anschluss für die Verbindungsleitung vom Motorventil (6). Der Spülarmatur (11), die aus den Absperrventilen (11.1), (11.2), (11.3) und den Anschlussfittings (12) und (13) besteht. Weiterhin ist im Rücklauf der Flowsensor (14), das Absperrventil Rücklauf (16) mit dem Drucksensor Rücklauf (15) und dem Anschlussfitting (17) mit einer zusätzlichen Anschlussmöglichkeit für ein Anzeigeelement für Druck, Temperatur oder einem Überdruckventil. Darüber hinaus beinhaltet die Solargruppe ein Schaltnetzteil für die Spannungsversorgung der Regelelektronik und für ein zusätzliches Motorventilen, sowie der Elektronik einer weiteren Synchronpumpe, die im Speicherkreis Verwendung finden kann.

Alle elektrischen Verbindungen zu den in der Gruppe befindlichen Sensoren, Ventile, Netzspannungsanschluss und der Gleichspannungsversorgung der Pumpenelektronik sind vor verdrahtet. Alle anderen elektrischen Verbindungen, die zu Erweiterungszwecken dienen werden sind als Steckverbinder ausgelegt, die ein Vertauschen der Leitungen verhindern bzw. unmöglich machen. Dies betrifft die Leitungen (19), (20), (21), (22), (23) und (24). Deren Funktion ist:

- Leitung (19): dient zur Weiterleitung der Netzspannung zur Speichergruppe
- Leitung (20): ist der Anschluss für den Temperatursensor im Boiler
- Leitung (21): ist ein universeller Eingang. An in können aktive Temperatursensoren, aktive optische Sensoren oder Signale angelegt werden, die die Regelung noch erweitern.

- Leitung (22): dient zum Anschluss eines zweiten Motorventils. Die Leitung beinhaltet die Spannungsversorgung und die Steuer- bzw. Regelsignale
- Leitung (23): dient zur Spannungsversorgung der Elektronik einer zweiten Synchronpumpe und deren Regelsignale
- Leitung (24): ist eine RS485-Schnittstelle und dient zur digitalen Kommunikation und als Serviceschnittstelle sowie für Softwareupdates

### Die Motorventile

Sie bedürfen einer gesonderten Beschreibung, da sie bisher in dieser Form und Funktionalität im Handel nicht erhältlich waren. Sie wurden speziell für diese Regelung entwickelt. Über die Nutzung in diesem Regelungssystem hinaus, sind noch viele andere Einsatzgebiete denkbar. Mit anderen Sensoren, Softwarealgorithmen und eventuell benötigten Schnittstellen (RS232, RS485, CAN, LIN, OpenTherm o. ä.), kann dieses Ventil auf die unterschiedlichsten Einsatzbedingungen angepasst werden. Für künftige Einsatzzwecke kann dieses Ventil auch mit einem Graphikdisplay und einer Tastatur oder mit einem Touchscreen ausgestattet werden, so dass sich die Einsatzvielfalt noch vergrößert und sich eine Bedienung bzw. Einstellung von Funktionalitäten noch günstiger gestaltet. Die einzigste Beschränkung ergibt sich aus dem Umstand, dass mit diesem Ventil nur fließfähige Medien geschaltet oder geregelt werden können.

Der Grundaufbau ist ein 3/2 - Wege - Ventil. Als Stellelement wird vorerst eine Kugel mit entsprechenden Durchgangsbohrungen verwendet. Bei der Verwendung als Umschaltventil wird eine Durchgangsbohrung in T Form in diesem Regelungssystem verwendet. Wird das Ventil als Mischerventil verwendet, kommt eine Klappe oder eine Kugel, die im Durchlassbereich so gefräst ist, das nur ein viertel des Durchmessers stehen bleibt, zum Einsatz. Das Stellelement wird von einem kleinen Elektromotor mit angeflanschtem Getriebe angetrieben. Bis hier hin ist der Ventilaufbau stand der Technik. Neu ist, dass dieser Motor seine Energie erhält, die entsprechend der Drehrichtung polarisiert ist, von einer im Ventilgehäuse untergebrachten kombinierten Regel- und Steuerelektronik, die extern angesteuert oder vollständig autark arbeiten kann.

Für die Verwendung der Ventile in einem Solar- oder Heizungssystem werden vorrangig Temperatursensoren Verwendung finden. Deshalb wurde bei der Auslegung der Elektronik diesen Sensoren der Vorzug gegeben. Zur Anwendung können Sensoren der Typen PT1000 oder KTY81-110 kommen. Unter Berücksichtigung dieser Sensoren wurden folgende Funktionsgruppen in der Elektronik realisiert. Ein Eingangsspannungswandler zur Bereitstellung der Versorgungsspannungen, zwei konstant Stromquellen zum betrieb der Temperatursensoren, eine Kodiereinheit mit der die Funktion und die Sensoren ausgewählt werden können, zwei Anpassverstärker für die Temperatursensoren, zwei Positionsschalter zur Ermittlung der Ventilstellung, ein Potentiometer als Referenzgeber, zwei verschieden farbige LED's für die optische Erkennung der Ventilbewegung, eine Brückenschaltung mit vor geschaltetem EMV-Filter für den betrieb des Motors sowie einem Mikrokontroller. Auf eine serielle Schnittstelle wurde vorerst verzichtet, da sie für diesen Einsatzzweck nicht unbedingt notwendig ist.

Der Eingangsspannungswandler ist ein DC/DC-Wandler auf Schaltnetzteilbasis. Er erzeugt eine sehr präzise Gleichspannung von 5 V. Die Eingangsspannung des Wandlers kann von 6 Vdc bis 40 Vdc betragen.

Die beiden konstant Stromquellen sind gleich aufgebaut und stellen einen Strom von 1 mA mit einer Toleranz von +/-0,5% bereit. Damit werden ausreichend gute Messergebnisse erzielt. Diese Stromquellen können über die Kodiereinheit an die entsprechenden Sensoren geschaltet werden. Gleichzeitig mit den Stormquellen werden auch die Anpassverstärker an die Sensoren geschaltet. Diese Verstärker entkoppeln die Sensoren von der restlichen Schaltung und passen die Signale, entsprechend des verwendeten Sensors, an die Auswerteeinheit, die sich im Mikrokontroller befindet, an. Die benötigte Verstärkung wird vom Mikrokontroller entsprechend der Kodierung, mit einem Transistor pro Verstärker, eingestellt.

Die Kodiereinheit besteht aus einem DIP - Switch mit acht Schaltern. Schalter 1 und 2 schalten die Stromquellen und die Verstärker an die Eingangsleitungen. Mit den Schaltern 3 und 4 werden Pull-Up - Widerstände an die Eingangsleitungen geschaltet, damit werden diese Leitungen zu digitalen Eingängen die Low-Aktiv sind. Es dürfen entweder nur Schalter 1 und 2 oder Schalter 3 und 4 in Stellung ON stehen. Die Schalter 5 bis 8 dienen der Kodierung der Funktionalität sowie der Festlegung der verwendeten Sensoren und die Benutzung einer manuell einstellbaren Referenz oder eines Festwertes, der als Referenz dient.

Die einstellbare Referenz ist als Potentiometer ausgeführt. Diese Referenz wird im autarken Betrieb als minimale oder maximale Temperatur beim Umschaltventil und als Referenztemperatur, um die geregelt oder ab der geregelt wird, beim betrieb als Mischerventil verwendet.

Die zwei Positionsschalter sind als Mikrotaster ausgeführt und um 90° versetzt angeordnet. Sie tasten eine Scheibe mit zwei Nuten ab. Diese Scheibe wird durch das am Motor angeflanschte Getriebe parallel zum Stellglied bewegt und die Nuten entsprechen damit der Stellung des Stellgliedes. Wird nun die Scheibe mit einer Nut an einem Mirkotaster vorbeigeführt, schaltet der Taster um, wenn die Nut seinen Abtaststößel frei gibt. Dies wird vom Mikrokontroller erkannt und der Motor wird abgeschaltet. Diese Grundfunktion ist für alle Betriebsarten erst einmal gleich. Unterschiede bei der Auswertung dieses Ereignisses gibt es nur zwischen dem autarken und dem angesteuerten Betrieb als Umschaltventil. Im autark betriebenen Mischer- oder Umschaltbetrieb sowie dem extern geregelten Mischerbetrieb sind die Positionsschalter grundsätzlich Endlagenschalter. Es ergibt sich damit ein zulässiger Arbeitswinkel von 90°.

Beim Betrieb als extern gesteuertes Umschaltventil werden die Positionsschalter nur als Zwangsstopp genutzt. Mit einem erneuten Befehl kann das Ventil um weitere 90° in dieselbe Richtung weiter gedreht werden. Damit kann das Stellelement des Ventils um 360° gedreht werden und es entstehen vier gültige Ventilstellungen. Zwei Ventilstellungen werden zum regulären Betrieb benötigt und die anderen beiden bleiben Testfunktionen vorbehalten, die für die Erfassung von Fehlerzuständen in der Regelelektronik (18) der Synchronpumpe (5) ausgenutzt werden. Aus diesem Grund ist bei jedem Neustart des Systems einmalig eine synchronisier Routine für die von der Regelelektronik verwalteten Umschaltventile nötig, damit die Grundstellung erkannt und eingestellt werden kann.

Die Motoransteuerung wird mit vier P-Kanal MOSFET Leistungstransistoren als Vollbrücke realisiert. Damit wird eine korrekte richtungsabhängige Spannungsversorgung des Motors erreicht. Um die Leistungstransistoren anzusteuern, werden zwei N-Kanal Logiktransistoren verwendet, die vom Mikrokontroller angesteuert werden, wo bei jeder dieser Logiktransistoren zwei P-Kanal MOSFET's parallel schaltet, die sich in der Brücke diagonal gegenüberliegen. Parallel zu den Logiktransistoren die die P-Kanal MOSFET's schalten, werden zwei N-Kanal Logiktransistoren angesteuert, die jeweils eine LED durchsteuern. Das heißt, dass bei jeder Motorbewegung auch die Drehrichtung des Ventils optisch angezeigt wird. Dazu werden für die LED's zwei unterschiedliche Farben eingesetzt, so dass man leicht die Drehrichtung anhand der Farbe erkennen kann. Die LED's leuchten aber nur solange, wie der Motor bewegt wird. Diese Verfahrensweise wird benutzt, um Strom bei Inaktivität zu sparen.

Die letzte Funktionseinheit der Ventile ist der Mikrokontroller, der das Herzstück bildet. Er kontrolliert die Motoransteuerung, die Positionsschalter, die Kodiereinheit, die Sensoren, die Referenzquelle und die Verstärker.

Mit dem gemultiplexten A/D-Wandler, der im Mikrokontroller integriert ist, werden alle analogen Signale mit einer Auflösung von 10 Bit digitalisiert und damit zur digitalen Bearbeitung verfügbar gemacht.

In der Startroutine werden als erstes alle grundlegenden Hardwareeinstellungen des Mikrokontrollers initialisiert. Dies ist der interne Oszillator und die digitalen Ein- und Ausgänge. Als nächstes wird die Kodiereinheit eingelesen, um die gewünschte Funktionalität zu erkennen. Im nächsten Schritt werden die Positionsschalter abgefragt, um die Ventilstellung zu ermitteln. Ist der Positionsschalter für die Grundstellung aktiv, wird die Startroutine sofort verlassen. Ist kein Positionsschalter aktiv, das heißt, das das Ventil irgendwo zwischen den Schaltern steht, oder der Schalter für die Endposition (Ventil vollständig geöffnet) ist aktiv, wird die Motorroutine zum schließen des Ventils aufgerufen und das Ventil damit in die Grundstellung gebracht. Nachdem der Positionsschalter für die Grundstellung aktiviert wurde, wird die Startroutine verlassen. Nach der Beendigung der Startroutine wird eine Endlosschleife angesprungen, die der in der Kodiereinheit eingestellten Funktionalität entspricht.

Ab diesem Punkt muss die Beschreibung entsprechend der gewünschten Funktionalität erfolgen. Der Zeit werden 14 mögliche Einstellungen der Kodiereinheit unterstützt, die aber in vier Beschreibungen abgehandelt werden können.

Eine Vorbemerkung bezüglich der Eingangsbelegung muss noch getätigt werden, damit es zu keinen Verwechslungen kommt. Die Leitung, die für den Anschluss des Vorlauftemperatursensors genutzt wird, ist bei der digitalen Ansteuerung auch die Leitung, die das Signal zum vorwärts bewegen (öffnen) des Ventils beinhaltet und analog dazu wird die Leitung für den Speichertemperatursensor (Rücklauftemperatursensor) zum rückwärts bewegen (schließen) des Ventils genutzt. Beide Leitungen sind bei der digitalen Ansteuerung Low-Aktiv.

### Extern gesteuertes Umschaltventil

Dies ist für die Software die einfachste Variante. Alle Eingangssignale sind digital und somit leicht auszuwerten. Es werden nur die Eingänge Vorwärts-, Rückwärtslauf, die beiden Eingänge für die Positionsschalter und die zwei Ausgänge zur Ansteuerung des Motors genutzt. Die Eingänge für die Positionsschalter können als Interrupteingänge initialisiert werden. Damit ergeben sich folgende Routinen die zum korrekten Betrieb benötigt werden: Die Interruptroutinen für die Positionsschalter, die Motor-Vorlauf-, die Motor-Rücklauf- und die Motor-Stopp-Routine.

Nachdem die Startroutine verlassen wurde, werden als erstes die Interruptroutinen initialisiert und anschließend die Eingänge für den Vorlauf (öffnen des Ventils) und für den Rücklauf (schließen des Ventils) überwacht. Beide Interruptroutinen lösen das Stoppen des Motors mit der Motor-Stopp-Routine aus. Voraussetzung für die Übernahme eines Signals ist, das beide Eingangsleitungen vor dem Schaltsignal auf High-Pegel sind.

Wird an dem Eingang Vorlauf ein Low-Pegel erkannt, wird die Motor-Vorlauf-Routine angesprungen und der entsprechende Ausgang für die Brückenschaltung auf High-Pegel gesetzt. Gleichzeitig wird ein Flag gesetzt, das dem Zustand "Vorlauf aktiv" besitzt. Dieses Flag wird erst zurück genommen, wenn ein Interrupt zum Stoppen des Motors eingetroffen ist und die Eingangsleitung wieder High-Pegel aufweist. In der Motor-Stopp-Routine, die durch die Interruptroutinen der Positionstaster aufgerufen wird, werden beide Ausgänge für die Brückenschaltung auf Low-Pegel gesetzt und damit der Motor gestoppt. Analog wird mit der Leitung Rücklauf verfahren, nur das die Routine Motor-Rücklauf Verwendung findet und das Flag für den Zustand "Rücklauf aktiv", sowie der entsprechende Ausgang für die Brückenschaltung auf High-Pegel gesetzt wird. Auch hier wird durch eine Interruptroutine der Motor gestoppt und das Flag bei einem High-Pegel am Eingang Rücklauf zurückgesetzt.

Verbleibt ein Eingang auf Low-Pegel, wird dies als Fehler interpretiert und es erfolgt ab diesem Zeitpunkt keine Ventilbewegung mehr, bis wieder beide Eingänge High-Pegel besitzen.

Die Länge der Schaltsignale sollte 200 µs nicht unterschreiten, damit sie sicher erkannt werden, aber auch deutlich kürzer wie die Umschaltzeit (ca. 7 Sekunden) des Ventils sein.

Angesteuert werden die Eingänge am einfachsten über eine Open-Kollektor- oder Open-Drainschaltung.

Autark arbeitendes Umschaltventil mit und ohne Referenzwerteinstellung

Im Normalfall werden zwei Temperatursensoren an die Elektronik angeschlossen. Es gibt aber auch einen spezial Fall, der nur ein Sensor erfordert. Wird nur ein Sensor benötigt, wird dieser am Eingang Vorlauf angeschlossen. Dieser spezial Fall, wird am Ende dieses Abschnitts erläutert.

Für die Realisierung dieser Funktionalität, werden zusätzlich zu den Routinen, die beim extern gesteuerten Ventil eingesetzt werden, noch die Routinen "VERSTÄRKER", "ADC-IN" und "TEMP-TEST" verwendet. Auch die Interruptroutinen werden dahingehend erweitert, das sie, je nach Positionsschalter, ein Flag setzen, das den Zuständen "Grundposition" oder "Endposition" entspricht. Diese Flag's werden in den Motorroutinen ausgewertet und zum Blockieren der jeweiligen Motordrehrichtung benutzt.

Zur Vereinfachung der Software und damit zur Wiederverwendung der ADC-IN-Routine werden durch diese alle drei analogen Werte eingelesen, unabhängig ob die jeweiligen Werte benutzt werden. Die Entscheidung, welcher Wert zur Steuerung benutzt wird, fällt erst in der TEMP-TESTRoutine, die das Flag "Referenz aktiv" und das Flag für den zweiten Temperatursensor auswertet.

Nach dem Verlassen der Startroutine werden als erstes die Interruptroutinen und der A/D-Wandler initialisiert. Als nächstes wird die Routine VERSTÄRKER aufgerufen und die entsprechende Verstärkung eingestellt, die dem jeweils in der Kodiereinheit eingestellten Sensortyp entspricht. Anschließend wird eine Schleife angesprungen, die aus den Routinen "ADC-IN" und "TEMP-TEST" besteht. Nur in der TEMP-TESTRoutine ist es möglich die Schleife kurzzeitig zu verlassen, um eine Motoraktion einzuleiten und anschließend wird in die Schleife zurück gekehrt. Der Motorstopp erfolgt immer über die Interruptroutinen.

In der ADC-IN-Routine werden nun die analog Werte eingelesen. Beispielhaft wird dies an dem Referenzwert erfolgen. Bei den anderen Werten wird analog verfahren. Da die Multiplexkanäle 9 bis 11 verwendet werden, braucht nach einlesen eines Wertes nur die Kanaladresse um eins inkrementiert werden, um den nächsten Wert einzulesen. Daraus ergibt sich folgender Ablauf für diese Routine.

Der Multiplexkanal 9 wird eingestellt und übergeben. Nach einer Vorhaltezeit startet das Auslesen des digitalen Wertes für diesen Kanal. Dieser Wert wird nun in einer dem Kanal zugeordneten Variable abgespeichert und der Multiplexkanal um 1 für die nächste Messung erhöht. Nach der dritten Messung wird wieder der Kanal 9 als Ausgangspunkt eingestellt und nachdem die Messergebnisse ausgewertet wurden, kann der nächste Durchlauf aktiviert werden.

Wenn alle Messergebnisse vorliegen wird die Routine "TEMP-TEST" aufgerufen. Als erstes werden die benötigten Flag's ausgewertet. Ist das Flag "Referenz aktiv" gesetzt und der Betreib mit zwei Sensoren ist aktiv, wird die Referenz mit der Speichertemperatur verglichen. Wird dabei festgestellt, das die Speichertemperatur größer oder gleich der Referenz ist, werden die Flag's "Grundposition" und "Endposition" ausgewertet. Ist das Flag "Grundposition" gesetzt, braucht keine weitere Aktion ausgeführt werden, da das Ventil geschlossen ist und damit wird der Speicher nicht durchflutet. Anderenfalls wird die Routine "Motor-Rücklauf' aufgerufen, um das Ventil zu schließen. Der Test der anderen Temperaturen kann entfallen, da der Speicher bereits vollständig geladen ist. Wird aber festgestellt, dass die Speichertemperatur kleiner als die Referenz ist, muss zusätzlich die Speichertemperatur mit der Vorlauftemperatur verglichen werden. Ist die Vorlauftemperatur höher und das Flag "Grundposition" ist gesetzt, muss das Ventil mit der Motor-Vorlauf-Routine geöffnet werden. Bei gesetztem Flag "Endposition" brauch keine Aktion ausgeführt werden, da das Ventil vollständig geöffnet ist.

Lautet aber das Testergebnis, die Vorlauftemperatur ist kleiner wie die Speichertemperatur, dann liegt keine nutzbare Energie am Ventil an. Damit muss das Ventil geschlossen bleiben oder geschlossen werden.

Ist das Flag "Referenz aktiv" nicht gesetzt, wird der erste Teil der Routine übersprungen und nur der Bereich ausgeführt, der den Vergleich zwischen Speichertemperatur und Vorlauftemperatur beinhaltet. Die auszuführenden Aktionen werden dann wieder in Abhängigkeit der Flag's "Grundposition" oder "Endposition" eingeleitet.

Sind alle Tests und Aktionen ausgeführt, wird wieder zur ADC-IN-Routine gesprungen und die Schleife beginnt von vorn.

In den "Motor-Vorlauf" und "Motor-Rücklauf" Routinen werden als erstes die Flag's "Vorlauf aktiv" und "Rücklauf aktiv" ausgetestet. Ist das für die jeweils aufgerufene Funktion vorgesehene Flag aktiv, brauch die Routine nicht weiter abgearbeitet werden, da die Aktion bereits ausgeführt wird und damit kann die Routine gleich wieder verlassen werden. Die Flag's für die beiden Endlagen werden nun in folge ebenfalls ausgewertet. Nur wenn das Flag "Grundposition" gesetzt ist kann, zum Beispiel, die Aktion Vorlauf des Motors ausgeführt werden. Die Aktion Motorrücklauf ist damit gesperrt.

Zu den Temperatursensoren ist ergänzend zu sagen, dass vorausgesetzt wird, dass beide Sensoren vom gleichen Typ sein müssen. Eine unterschiedliche Bestückung ist nicht vorgesehen und auch aus messtechnischen Gründen nicht sinnvoll.

Der am Anfang dieses Abschnitts erwähnte Spezialfall, betrifft den Einsatz des Ventils als Überhitzungsschutz für die Solarfläche. Bei Anlagen die nur mit einem sehr begrenzten Speichervolumen ausgestattet werden können, ist so eine Möglichkeit in Betracht zu ziehen, um einen Wärmetauscher in betrieb zusetzen, der die überschüssige Energie aufnimmt oder abgibt. Ein anderer Einsatzfall währe eine ungeregelte Zusatzheizung (Kamin ö. ä.). Um ein überhitzen dieser Heizung zu verhindern, kann dieses Ventil, bei der Erreichung der maximal zulässigen Temperatur im Kurzzeitspeicher, zusätzliche Langzeitspeicher zum Kreislauf dazu schalten.

Zu diesem Zweck dient die einstellbare Referenz oder ein gespeicherter Festwert als minimal Temperatur, ab der das öffnen des Ventils erfolgt. Beim unterschreiten dieses Wertes wird das Ventil wieder geschlossen.

### Extern geregeltes Mischerventil

Der Form halber soll hier erwähnt werden, dass die für die Regelung notwendigen Sensoren an der Regeleinrichtung bzw. Regelelektronik angeschlossen werden müssen und das in dieser ein Vergleichswert eingestellt oder abgespeichert werden muss.

Die Eingangsbelegung ist die gleiche, wie beim extern gesteuerten Umschaltventil. Nur die Signalisierung der Aktionen ist anders Aufgebaut. Es kommt ein PWM ähnliches Signal zum Einsatz.

Die Motorroutine Rücklauf wird nur noch in der Startroutine benutzt. Es kommen als Ersatz für die bisherigen Routinen folgende hinzu: "TAKT-VOR" und "TAKT-ZURÜCK", die eine konstante Laufzeit von circa 10 ms haben. Nach dieser Zeit wird der Motor automatisch abgeschaltet. Mit dieser Motorlaufzeit ergeben sich ca. 700 Einzelschritte. Für den Arbeitswinkel von 90° bedeutet das, dass für jeden Einzelschritt etwa 0,13° zur Verfügung stehen. Dieser Wert ist bei weitem ausreichend klein, um Feinfühlig genug zu arbeiten.

Die Routine "Motor-Stopp", die durch die Interruptroutinen aufgerufen wird, wird weiter verwendet. Sie dient dazu, dass die jeweiligen Endlagen nicht überfahren werden können und das das jeweilig gültige Flag für die Endlagen gesetzt wird, die auch hier den Arbeitswinkel auf 90° beschränken.

Die Reaktion auf die Eingänge ist ähnlich wie beim extern gesteuerten Umschaltventil. Auch hier muss die nichtbenutzte Eingangsleitung permanent High-Pegel aufweisen.

Nach diesen Vorbetrachtungen ergibt sich der folgende Ablauf. Beim Eintritt in diese Routine werden die Interruptroutinen initialisiert. Daran anschließend erfolgt bereits die Abfrage der Eingänge. Dies ist eine sehr kurze Schleife, die permanent durchlaufen wird. Legt man nun an einen Eingang ein Low-Pegel, wird dieser sehr schnell erkannt. Ist dies zum Beispiel der Vorlauf und ist das Flag "Grundstellung" gesetzt oder beide Flag's "Grundstellung" und "Endstellung" sind nicht gesetzt, dann wird der erste Schritt Vorwärts, durch aufrufen der Funktion "TAKT-VOR", getätigt. Dies wird solange wiederholt, bis entweder das Eingangssignal auf High-Pegel wechselt oder die Endlage erreicht wird. Spätestens zu diesem Ereignis wird ein weiterbewegen des Motors unterbunden. Analog dazu wird mit dem Signal Rückwärts verfahren, wobei die Routine "TAKT-ZURÜCK" zum Einsatz kommt. Soll nur ein Schritt vorwärts oder Rückwärts getätigt werden, muss das Eingangssignal deutlich kleiner 10 ms sein. Ist eine Motoraktion angelaufen, wird erst nach ihrer Beendigung auf geänderte Eingangssignale reagiert.

Angesteuert werden die Eingänge ebenfalls am einfachsten über eine Open-Kollektor- oder Open-Drainschaltung. Zur Bereitstellung der Signalzeit (-länge) sollte optimal ein PD-Regler verwendet werden. Ein PID-Regler ist nicht notwendig, da die Ventilelektronik, inklusive des Stellmotors, den I-Anteil des Reglers bereits realisiert.

Autark arbeitendes Mischerventil mit und ohne Referenzwerteinstellung

Diese Funktion ist für die Software die aufwendigste Variante. Sie beinhaltet alle bisher beschriebenen Routinen plus eines Software PD-Reglers.

Die zwei wichtigsten Einsatzgebiete für diese Funktionalität sind zum Beispiel die Fußbodenheizung und die Rücklaufanhebung in Brennersystemen. An diesen beiden Beispielen sollen die implementierten Funktionen beschrieben werden.

Wie bereits in den vorangegangenen Beschreibungen erwähnt, wird beim Neustart des Ventils die Ventilgrundstellung, das heißt Ventil geschlossen, eingestellt und anschließend die entsprechende Funktion gewählt.

Ist die Funktion "Ref = max" gewählt, entspricht dies der Funktion, die für eine Fußbodenheizung benötigt wird. Der Temperatursensor Rücklauf bzw. Speichertemperatur wird am Ausgang des Ventils im Kreislauf der Fußbodenheizung platziert und der Temperatursensor Vorlauf im Eingang des Ventils eingefügt, also im allgemeinen Vorlauf der Heizung. Das Potentiometer dient nun als Referenzwert für die Temperatur, die die Fußbodenheizung haben soll. Liegt im Vorlauf der Heizung eine genügend hohe Temperatur an und registriert der Speichersensor im Fußbodenkreislauf eine geringere Temperatur wie durch den Referenzwert vorgegeben, öffnet das Ventil schrittweise, bis sich die Temperatur an den Referenzwert angeglichen hat. Dann wird das Ventil wieder geschlossen. Sollte die Vorlauftemperatur geringer sein, wie die Temperatur im Fußbodenkreislauf, wird ein öffnen des Ventils unterbunden.

Ist die Funktion "Ref = min" gewählt, heißt das, das das Ventil als Rücklaufanhebung eingesetzt ist und demzufolge dient der Referenzwert als Temperatur, ab der das Ventil öffnet. Hier kann je nach Brennersystem ein Festwert programmiert werden, damit entfällt die Einstellung des Potentiometers. Für diesen Fall reicht es auch, wenn nur ein Temperatursensor am Ventil angeschlossen ist und dieser im Rücklauf zum Brenner platziert wird. Wie bereits weiter oben erwähnt, wird bei Betrieb des Ventils mit einem Sensor, dieser grundsätzlich und unabhängig von der physikalischen Messstelle am Vorlaufeingang angeschlossen.

Startet der Brenner, ist der Kreislauf so geschaltet, dass der Vorlauf direkt in den Rücklauf zurückgeführt wird. Erst wenn die Rücklauftemperatur den eingestellten Temperaturwert erreicht, wird das Ventil langsam geöffnet, so das die Rücklauftemperatur weitestgehend gleich bleibt. Ist das Ventil vollständig geöffnet, wird der Regler gestoppt und es wird gewartet, dass die Temperatur wieder abfällt. Beim erreichen der maximal Temperatur schaltet der Brenner selbsttätig ab und das System kühlt langsam wieder aus. Wird nun die eingestellte Temperatur unterschritten, wird automatisch das Ventil wieder geschlossen und so für den nächsten Brennerstart vorbereitet.

Bei beiden Varianten, werden große Temperaturänderungen mit der Funktion "Vorlauf" oder "Rücklauf", die bei Bedarf vom PD-Regler abgebrochen werden können, und kleine Änderungen mit den Funktionen "TAKT-VOR" oder "TAKT-ZURÜCK" ausgeglichen. Welche Routine angesprochen wird hängt vom Ergebnis der PD-Regler-Routine ab.

### Die Regelung des solaren Ertrags

Der Kern der Regelung ist die elektronisch kommutierte Synchronpumpe (5) mit der integrierten Elektronik (18). Sie ist das aktive Regelglied des Systems. Durch die dynamische Leistungsanpassung der Pumpe, durch einen Software-Regler, wird die Durchflutung des Systems direkt beeinflusst und damit der Wirkungsgrad der Energieaufnahme in der Solarfläche und der Energieabgabe in den Speichern ständig neu festgelegt. Hierbei wird auch der Effekt ausgenutzt, dass bei sinkender Pumpenleistung die Aufnahme der elektrischen Leistung der Pumpe sinkt und das hat wiederum einen positiven Einfluss auf den gesamt Wirkungsgrad der Anlage. Einen weiterer positiver Einfluss auf den gesamt Wirkungsgrad ist, das die Synchronpumpe über den gesamten zulässigen Temperaturbereich keine nennenswerte Erhöhung der elektrischen Leistung aufweist.

Werden bei einer Synchronpumpe der Eingang und der Ausgang durch Absperrventile verschlossen, wird die Pumpe nicht beschädigt. Durch die elektronische Kommutierung wird dieser Zustand erkannt und die Leistung der Pumpe wird gedrosselt, also die elektrische Leistungsaufnahme nimmt ab und der Motor wird in einem sicheren Zustand gefahren. Zu diesen Vorteilen kommt noch hinzu, dass sich Synchronmotoren leicht und mit wenig Aufwand durch ein PWM-Signal dynamisch regeln lassen. All die genannten Vorteile bilden die Grundlage für den Einsatz einer Synchronpumpe als Regelglied in einer optimierten Thermosolaranlage.

Eine weitere bedeutende Baugruppe ist die Regelelektronik (18). Sie beinhaltet alle Funktionsgruppen, die für die Regelung erforderlich sind. Dies sind im Einzelnen die Versorgung und Auswertung der Sensoren, die Steuerung der Ventile sowie die Regelfunktionen für das Hauptregelglied, die Pumpe (5), und für eine eventuell vorhandene zweite Pumpe (41) im Speicherkreis. Darüber hinaus sind in der Elektronik (18) Kontroll- und Sicherheitsfunktionen implementiert, die für eine reibungslose und wartungsarme Funktion der Anlage sorgen. Betrieben wird die Regelelektronik mit einem Real-Time-Betriebssystem (RTOS) mit einer gesamt Zykluszeit von 100 ms. Die einzelnen Task-Zeiten richten sich nach dem Berechnungsaufwand der Funktionen in den Einzel Task's.

Den Kern der Regelung bildet ein Wärmemengenmesser, der das Eingangssignal für die Pumpen-Regler-Routine bildet. Gestartet werden der Wärmemengenmesser und damit auch der Regler durch die Reglerroutine TEMP, die auch den Stopp der Regelung veranlasst.

Der Wärmemengenmesser besteht aus den Temperatursensoren Vorlauf (3), Rücklauf (9) und dem Flowsensor (14) sowie einer Variablen, die die Wärmekapazität des Mediums beinhaltet. Diese Variable muss beim füllen der Anlage, entsprechend dem Medium, eingegeben oder nach einem Spülvorgang gegebenenfalls korrigiert werden.

Aus der Differenztemperatur der Sensoren Vorlauf und Rücklauf, der gemessenen Durchflussmenge und der eingestellten Wärmekapazität des Mediums wird die momentane und kumulierte Wärmemenge berechnet und abgespeichert. Dies geschieht alle 10 Sekunden. Damit ist die Taktzeit des Reglers festgelegt. Die Taktzeit ergibt sich durch den Flowsensor. Damit eine hinreichend genaue Durchflussmenge gemessen werden kann, müssen über einen längeren Zeitraum die Pulse des Flowsensors aufgezeichnet werden. Vom Hersteller dieser Sensoren wird ein mindest Zeitraum von 3 Sekunden vorgegeben. Um nun sehr kleine Flowmengen noch mit ausreichender Genauigkeit zu erfassen, muss diese Zeit verlängert werden. Als optimal haben sich 10 Sekunden herausgestellt. Sie sind lang genug für die Messung und im Verhältnis zu den Änderungsgeschwindigkeiten im System ausreichend klein.

Die momentane Wärmemenge wird dem Pumpen-Regler als Eingangsgröße zugeführt, der daraus ein PWM-Signal für die Pumpe generiert. Dem Pumpen-Regler ist eine Begrenzerroutine nachgeschaltet, die ihre Grenzwerte aus den Reglerroutinen FLOW und TEMP erhält. Wird von der Begrenzerroutine eine Grenzwertverletzung festgestellt, werden die Regelparameter nach justiert. Dies muss aber vorsichtig und in mehreren kleinen Schritten mit anschließender erneuter Prüfung erfolgen, da der Pumpen-Regler sonst instabil wird und eine Regelung damit nicht mehr möglich ist. Durch diese Funktionalität wird dieser Regler zu einem sehr dynamischen und sich auf die jeweiligen Bedingungen anpassendes Regelungsinstrument.

Die Reglerroutine FLOW ist ein einfacher Zwei-Punkt-Regler der bei jedem Pumpenstart aktiviert und beim abschalten der Pumpe deaktiviert wird. Diese Routine berechnet und überwacht die mindest Pumpenleistung, die erforderlich ist, damit ein Durchfluss im System garantiert werden kann. Außerdem berechnet sie die maximale Pumpenleistung, die erforderlich ist, um einen vorgegebenen maximalen Flow zu erreichen. Diese beiden Werte werden als PWM-Grenzwerte an die Begrenzerroutine übergeben.

Eine zusätzliche Funktion dieser Routine ist, das feststellen von einem Gasploster in flüssigkeitsbetriebenen Anlagen. Zu diesem Zweck wird nach jedem Spülvorgang eine Variable (FLOW_MIN) als Referenz gespeichert, die die minimale Pumpenleistung beinhaltet, die gerade noch einen Volumenstrom bewirkt. Im laufenden Betrieb der Routine wird diese Leistung ständig bzw. spätestens bei jedem Startversuch, aktualisiert und in der Variablen (FLOW_MIN_IST) abgelegt. Bildet man nun die Differenz zwischen FLOW_MIN und FLOW_MIN_IST und ist diese Differenz größer eines voreingestellten Wertes, so kann man davon ausgehen, das sich eine Menge Gas im System befindet, das den Volumenstrom bremst. Ist dies der Fall, wird eine Warnung auf dem Display ausgegeben, die zum erneuten Spülen der Anlage auffordert. Diese Warnung ist solange nicht kritisch, solange noch genügend Pumpenleistung zum erreichen des voreingestellten maximalen Volumenstromes vorhanden ist. Reicht die Pumpenleistung nicht mehr aus, wird die Warnmeldung zu einer Fehlermeldung umgewandelt.

Diese Reglerroutine wird ebenfalls dazu benutzt, um Fehlerzustände im System zu erkennen, bezüglich der vorhandenen handbetätigten Absperrventile, der Funktion der Pumpe selbst und der Synchronisierung der benutzten Motorventile.

Die Reglerroutine DRUCK erfasst alle zum Betrieb der Anlage benötigten Drücke im System, dazu ist sie ständig aktiv und kann nicht abgeschaltet werden. Die Drücke werden dazu mit zwei Absolutdrucksensoren erfasst, die mit einer Auflösung von 13 Bit digitalisiert werden. Dies entspricht einer Druckauflösung von ca. 0,5 mBar, das heißt, das mit Sicherheit Druckänderungen im Bereich von 10 mBar registriert werden können, bei einem Druckbereich von 0 bis 4 Bar.

Die Hauptaufgabe dieser Routine liegt in der Überwachung des Systemdruckes. Wird ein im System gespeicherter Solldruck unterschritten, wird eine Warnmeldung ausgegeben, die zum nachfüllen des Systems auffordert. Sinkt der Anlagendruck sehr schnell, muss von einem Defekt ausgegangen werden. Zu diesem Zweck wird an die Reglerroutine TEMP ein Signal gesandt, das ein schließen des Motorventils (6) veranlasst. Verringert sich der Druck dann nicht mehr, liegt ein defekt im Speicherkreislauf vor, anderenfalls, wenn der Druck weiter sinkt, liegt der Defekt im Solarkreis. Die jeweilige Fehlermeldung wird auf dem Display angezeigt. Liegt der Fehler im Solarkreis, wird die Pumpe (5) abgeschaltet, um einen Trockenlauf der Pumpe zu verhindern und damit die Pumpe zu schützen. Befindet sich der Fehler im Speicherkreis, bleibt das Ventil (6) solange geschlossen, bis es von einer Person, die die Wartung bzw. Reparatur durchgeführt hat, wieder frei geschaltet wird.

Durch die Verwendung von zwei Drucksensoren, ist es möglich, dass die Funktion der Pumpe überwacht werden kann. Dazu ist der Drucksensor Vorlauf (4) in unmittelbarer nähe zum Saugeingang der Pumpe (5) und der Drucksensor Rücklauf (15) nach dem Flowsensor (14) auf der Druckseite der Pumpe platziert. Beim korrekten betrieb der Pumpe, erzeugt der Anlagenwiderstand eine geringe Druckdifferenz zwischen dem Vorlauf und den Rücklauf Sensor, der von der Regelung ausgewertet werden kann. Wird die Pumpe nun angeregelt und es entsteht keine Druckdifferenz, so kann mit großer Wahrscheinlichkeit davon ausgegangen werden, das sich die Pumpe nicht dreht und eventuell verklemmt ist. Nun kann durch pulsen versucht werden, die Pumpe wieder frei zu bekommen. Gelingt dies nicht in einer vorgegebenen Zeit, wird eine Fehlermeldung ausgegeben.

Ein weiterer Funktionstest ist in der Verbindung mit der Reglerroutine FLOW möglich. Ist ein Differenzdruck vorhanden und es kommt zu keinem Durchfluss und sind die Motorventile synchronisiert, dann liegt mit Sicherheit eine Fehlbedienung eines oder mehrerer Absperrventile vor. Diese Fehlermeldung wird ebenfalls auf dem Display zur Anzeige gebracht.

In der Beschreibung Stand der Technik wurde bereits auf das Patent AT410988B hingewiesen. Dort wurden auch Nachteile genannt, die es zu beheben gilt. Durch die Trennung des Systems während der Bereitschaft in zwei Teilsysteme, wird der erste Punkt bereits verbessert. Durch die Trennung wird das Volumen der Anlage künstlich verkleinert, so dass sich Druckänderungen wesentlich früher und mit einer wesentlich höheren Druckdifferenz einstellen, so das auch größere Solarflächen sich nach diesem Prinzip starten lassen. Der zweite Teil der Lösung ist, das nach dem schließen des Ventils (6) und dem abschalten der Pumpe (5) der Druck des Systems weiter überwacht wird. Solange sich dieser durch den Abkühlvorgang verringert, wird dies mitprotokolliert und der niedrigste Wert als Referenz für den Neustart abgespeichert. Beginnt nun die Sonne zu scheinen, erhöht sich die Temperatur des Mediums und damit steigt der Druck im Solarkreis wieder an. Übersteigt nun die Druckänderung einen voreingestellten Wert, wird ein Signal generiert und an die Reglerroutine TEMP übergeben, das die Pumpe (14) in der Solargruppe gestartet werden soll. Die Routine TEMP startet die Pumpe (14), ohne das das Ventil (6) geöffnet wird. Gleichzeitig wird, falls vorhanden, die Pumpe (41) in der Speichergruppe in betrieb gesetzt. Die Laufzeit der Pumpen spielt nur eine untergeordnete Rolle, da der Solarkreis vom Speicherkreis vollständig getrennt ist und keine gespeicherte Energie verloren gehen kann, außerdem werden die Pumpen nur mit einer geringen Leistung gefahren, so das auch der Energieverbrauch an elektrischer Energie sehr gering ist. Nun kann die Temperatur, die von der Solarfläche kommt gemessen werden. Gleichzeitig stellt sich am Rücklauftemperatursensor (9) die Temperatur des letzten Speichers ein, wenn dieser kein Eingangsventil besitzt, oder die vorhandene Raumtemperatur falls ein Ventil vorgeschaltet ist. Anschließend wird der Wert des Rücklauftemperatursensors (9) mit dem Wert des Vorlauftemperatursensors (3) verglichen werden. Falls in kleinen Systemen nur ein Boiler vorhanden ist, wird zum Vergleich mit der Vorlauftemperatur der Temperatursensor Boiler, der an Anschluss (20) im Bild 1 angeschlossen werden muss, benutzt.

Reicht die Temperatur der Solarfläche noch nicht für eine Nutzung, werden die Solarpumpe (5) und die eventuell vorhandene Pumpe (41) wieder abgeschaltet und der zu diesem Zeitpunkt vorhandene Druck wird als neuer Referenzwert gespeichert. Erreicht bei einem erneuten Startversuch die Vorlauftemperatur einen Wert in der Nähe der Speichertemperatur, bleibt die Solarpumpe (5) auf kleinster Leistung in betrieb, so das von diesem Zeitpunkt an, ständig die Temperatur der Solarfiläche überwacht werden kann und sobald die Speichertemperatur überschritten wird, wird auch das Ventil (6) geöffnet, der Wärmemengenmesser gestartet und somit die gesamte Regelung in betrieb gesetzt.

Die Reglerroutine TEMP ist ebenfalls als Zwei-Punkt-Regler ausgelegt und ist immer aktiv. Diese Routine erfasst alle Temperaturen, berechnet erforderliche Werte und reicht sie entsprechend an Routinen weiter, die diese ebenfalls benötigen. Diese Routine kann auch Signale empfangen, die von der Reglerroutine DRUCK generiert werden, wie bereits im vorangegangenen Abschnitt beschrieben, um bestimmte Testfunktionen zu starten. Sie ist auch für die Ansteuerung des Motorventils (6) (Bild 1) sowie dem eventuell zusätzlich vorhandenen Motorventil (33) (Bild 2) oder (60) (Bild 3) und für den Start des Wärmemengenmessers sowie dem Pumpen-Regler mit dem nachfolgenden Begrenzer verantwortlich.

Als Temperatursensoren kommen PT1000 Sensor zum Einsatz. Für die drei Sensoren Vorlauf (3), Rücklauf (9) und Boiler, an Leitung (20), ist je eine Konstantstromquelle in der Regelelektronik (18) enthalten. Die Konstantstromquellen liefern einen Strom von 1 mA mit einer Genauigkeit von +/- 0,5%. Zur Verbesserung der Genauigkeit, wird während der Produktion der Stromwert auf eine Toleranz von 0,1% justiert. Auch der reale Widerstandswert des Sensors plus den Widerstand der Zuleitung zum Sensor kann im Wartungsmenü durch einen Korrekturfaktor kompensiert werden, dieses trifft vor allen für den Boilersensor zu. Der Konstantstrom wird in die jeweiligen Sensoren eingeprägt und der daraus entstehende Spannungsabfall, über die Sensoren, wird mit 13 Bit Auflösung digitalisiert. Als Referenzspannung für den A/D-Wandler wird eine Spannung von 2,5V +/- 0,5% bereitgestellt. Mit diesen Voraussetzungen werden die Temperaturwerte mit einer Genauigkeit von 0.1 °C und einer Toleranz von deutlich kleiner +/- 1 % ermittelt.

Um eingekoppelte Störungen zu minimieren, werden für jeden Sensor Mittelwerte gebildet. Die Mittelwertbildung geschieht ausschließlich mit den Digitalwerten des A/D-Wandlers. Erst wenn ein konkreter Temperaturwert benötigt wird, wird der Digitalwert zu einem entsprechenden Temperaturwert konvertiert.

Der Universaleingang an der Leitung (21) bildet eine Besonderheit in dieser Regelroutine. Er kann mit unterschiedlichen Signalen benutzt werden oder unbeschaltet bleiben. Die Funktion dieses Eingangs muss im Wartungsmenü eingestellt werden, da Standardmäßig der Eingang deaktiviert ist. Reicht dem Anwender nicht aus, dass das System über den Druck gestartet wird, kann an diesen Eingang ein aktiver Temperatursensor oder ein aktiver optischer Sensor angeschlossen werden. Je nach Sensortyp und Platzierung können der Systemstart veranlasst werden oder eine Frostschutzfunktion gestartet oder sogar eine Abtaufunktion initialisiert werden. Über diese Funktionalität hinaus, kann das System auch mit einem externen digitalen Signal gestartet werden, das zum Beispiel bei dem Einsatz der Pumpe in einer Rücklaufanhebung für Brennersysteme nötig ist. Dazu kann an diesem Eingang ein Signal mit einer zulässigen Spannung von bis zu 30V und einer Signallänge von mindestens 100 ms eingespeist werden.

Unabhängig mit welcher Art und Weise ein Pumpenstart veranlasst wird, wird der Start erst gültig, wenn die Bedingungen zwischen dem Vorlauftemperatursensor und der Speichertemperatur bzw. eines gespeicherten Referenzwertes erfüllt sind.

Wird ein Startereignis registriert, wird die Pumpe (5) zuerst mit voller Leistung gestartet und dann wird die Leistung soweit reduziert, dass ein sicherer Flow mit einer geringen Pumpenleistung durch die Solarfläche sichergestellt ist. Anschließend wird eine eventuell vorhandene Pumpe (41) im Speicherkreislauf ebenfalls mit geringer Leistung gestartet. Von nun ab wird die Vorlauftemperatur überwacht, um festzustellen, welche Energie von der Solarfläche zur Verfügung gestellt wird. Hat sich die Vorlauftemperatur stabilisiert, wird sie mit der Rücklauf- bzw. Speichertemperatur verglichen. Reicht die zur Verfügung gestellte Energie nicht aus und ist die Differenz zwischen Vorlauf- und Speichertemperatur zu groß, wird die eventuell vorhandene Pumpe (41) im Speicherkreislauf gestoppt und anschließend auch die Pumpe (5) im Solarkreis abgeschaltet. Die Abschaltung der Pumpen wird an die Routine, die den Startvorgang eingeleitet hat zurückgemeldet, um eventuelle neue Referenzwerte festzulegen. Ist die Temperaturdifferenz jedoch klein, aber die Energie ist noch nicht geeignet um sie dem Speicher zu zuführen, wird zwar die eventuell vorhandene Pumpe (41) im Speicherkreis abgeschaltet, aber die Pumpe (5) im Solarkreis bleibt mit geringer Leistung aktiv. Somit kann sichergestellt werden, dass sobald ausreichend Energie zur Verfügung steht, die Regelung aktiv geschaltet werden kann.

Sind alle Startbedingungen zum Start der Regelung erfüllt, wird das Ventil (6) geöffnet und der Wärmemengenmesser gestartet. Mit dem ersten Messwert des Wärmemengenmessers wird durch die Übergabe dieses Wertes die Regelung frei geschaltet. Anschließend wird dauernd die Temperaturdifferenz zwischen Vorlauf und Rücklauf überwacht und an die Begrenzerroutine zur Auswertung übergeben.

Ist für den Boiler ein extra Ventil, entsprechend dem Ventil (33) nach Bild 2 oder (60) nach Bild 3, vorhanden, wird die Boilertemperatur, an Leitung (20), für dieses Ventil benutzt. Durch die Überwachung der Boilertemperatur und der Vergleich mit der Vorlauftemperatur und dem voreingestellten Maximalwert, werden die Schaltschwellen für dieses Ventil ermittelt. Ist die Vorlauftemperatur höher wie die Boilertemperatur und ist die maximale Boilertemperatur noch nicht erreicht, wird das Ventil (33) bzw. (60) geöffnet. Erreicht die Boilertemperatur ihren voreingestellten Maximalwert, wird das Ventil (33) bzw. (60) wieder geschlossen, das heißt, das der Flow durch das Ventil (33) bzw. (60) am Boiler vorbei geleitet wird und damit die in der Solarfläche erzeugte Energie nachfolgenden Speichern in vollem Umfang zur Verfügung steht.

Reicht die in der Solarfläche erzeugte Energie nicht mehr für die Speicher aus, wird das Ventil (6) wieder geschlossen und der Wärmemengenmesser gestoppt. Da nun für die Regelung keine Messwerte mehr vorliegen, stoppt auch die Regelung. Die Pumpe (5) bleibt aber noch eine Zeit aktiv, damit der weitere Temperaturverlauf in der Solarfläche beobachtet werden kann. Sinkt die Temperatur des Vorlaufes weiter ab, wird nach einer voreingestellten Zeit auch die Pumpe (5) abgeschaltet. Dieses Ereignis, wird an die Reglerroutine Druck übergeben, damit diese den weiteren Druckverlauf registrieren und bearbeiten kann. Das System ist damit wieder im Bereitschaftsmodus.

Werden keine Sensoren am Anschluss (21) angeschlossen, wird im Bereitschaftsmodus ab und zu ein Pumpenstart ausgeführt. Dies dient dazu, zu erkennen, ob eine Frostschutzfunktion aktiviert werden muss. Diese Funktion ist selbst lernend. Werden bei den Tests genügend hohe Temperaturen gemessen, wird die Zeit bis zum nächsten Versuch verlängert. Ergeben sich aber negative Temperaturen, wird die Zykluszeit der Tests verkürzt. Wird eine Temperatur nahe der Frostschutztemperatur erreicht, die sich durch das Mischungsverhältnis zwischen Wasser und Glykol ergibt, bleibt die Pumpe (5) aktiv und der Flow und die Temperatur im Vorlauf werden intensiv überwacht. Allein durch diese Funktion wird ein erster Frostschutz realisiert, denn ein bewegtes Medium friert nicht so schnell ein. Sinkt die Vorlauftemperatur unter die Frostschutztemperatur und muss eine relativ hohe Pumpenleistung gefahren werden um noch einen Durchfluss zu erreichen, kann in Ausnahmefällen das Ventil (6) für kurze Zeit geöffnet werden, um das einfrieren der Solarfläche zu verhindern.

Eine Abtaufunktion kann nur mit an der Leitung (21) angeschlossenen optischen Sensoren realisiert werden. Zu diesem Zweck wird ein Sensor im Dach oder der Solarfläche installiert und ein Referenzsensor an einer geschützten Stelle montiert. Aus der Zusammenschaltung der Sensoren ergibt sich dann ein spezifischer Wert, der an die Regelelektronik weiter geleitet wird. Die Regelelektronik erkennt in Verbindung mit der Temperaturmessung daraus, ob ein Abtauvorgang eingeleitet werden muss. Auch diese Funktion sollte möglichst selten benutzt werden, aber für spezielle Anwendungen macht diese einen Sinn. Für Standardanwendungen ist diese Funktion nicht notwendig, da sie implementiert ist, sollte sie auch an dieser Stelle erwähnt und kurz beschrieben werden.

Die Reglerroutine PUMPE regelt die Pumpenleistung der Synchronpumpe (5) und der eventuell vorhandenen Synchronpumpe (41). Eine oder mehrere im System vorhandene Slave-Pumpe(n) erkennen ihre Funktion automatisch oder durch eine Vorgabe im Wartungsmenü. Um festzustellen, ob eine oder mehrere zusätzliche Pumpe(n) im System vorhanden sind, wird beim Neustart des Systems, das heißt, beim anlegen der Versorgungsspannung, vom Master eine Testroutine gestartet, die versucht, eine Kommunikation mit einer eventuell vorhandenen weiteren Pumpe, herzustellen. Gelingt dies, wird ein entsprechendes Flag gesetzt. Ist eine weitere Pumpe vorhanden, wird ab einer vordefinierten benötigten Pumpenleistung, die gesamt Pumpenleistung aufgeteilt. Die Teilung der Pumpenleistung wird unter normalen Bedingungen in einem Verhältnis von zwei dritteln für den Master und ein drittel für den Slave erfolgen. Wird eine maximale Leistung benötigt, kann es vorkommen, dass alle Pumpen mit maximaler Leistung gefahren werden müssen. Dies ist aber ein Indiz dafür, das das System im Verhältnis zwischen Solarfläche und Speichervolumen nicht optimal geplant und ausgeführt wurde. Ein nachrüsten oder umrüsten von Speichern ist dann unumgänglich.

Wird der Reglerroutine PUMPE ein Messwert des Wärmemengenmessers übergeben, beginnt die aktive Regelung der Pumpe(n). Zu diesem Zweck wird der übergebene Messwert mit dem vorherigen verglichen und mit einem veränderbaren Faktor multipliziert. Aus diesem Ergebnis wird ein PWM-Wert berechnet und der Begrenzerroutine übergeben. Die Begrenzerroutine vergleicht diesen PWM-Wert mit den Grenzbedingungen, die durch die Temperaturdifferenz, der Vorlauftemperatur und den minimalen und maximalen Flowwerten, vorbestimmt sind. Werden die Grenzwerte eingehalten, wird der PWM-Wert an die Pumpe (5) weiter geleitet oder anderenfalls wird der PWM-Wert entsprechend begrenzt. Wird eine Grenze verletzt, wird der veränderbare Faktor verkleinert oder vergrößert, je nach Bedarf, oder die Slave-Pumpe(n) werden aktiviert und damit der Regelbereich wieder vergrößert. Das heißt, dass der Pumpenregler ständig in einer Schwebung gehalten wird. Dies ist Notwendig, da normal betriebene Regler immer Versuchen einen konstanten Wert zu erreichen. In diesem Fall darf dies nicht passieren, da ständig nach einem möglichst hohen Wert des Wärmemengenmessers gesucht wird und dies ist ein sehr dynamischer Vorgang, dem Rechnung getragen werden muss. Die Änderung des variablen Faktors muss unbedingt sehr vorsichtig geschehen, da es bei zu großen Änderungen zum Aufschwingen des Systems kommt und damit keine Regelung mehr möglich ist. Wird ein Aufschwingen festgestellt, wird der Regler kurzzeitig gestoppt und mit sicheren Werten neu gestartet. Dabei werden die Grenzen für den veränderlichen Faktor neu definiert, das heißt, die mögliche Änderung des Faktors wird auf kleinere Werte festgelegt.

Die Grenzwerte, die durch die Reglerroutinen FLOW und TEMP bereit gestellt werden, richten sich nach dem aktuelle Systemwiderstand und der maximalen voreingestellten Pumpenleistung. Der untere Grenzwert, ergibt sich aus dem minimalen Flow, der benötigt wird, damit ein Durchfluss in der Solarfläche aufrecht erhalten werden kann. Dieser Wert kann durch die Temperaturdifferenz zwischen Vorlauf und Rücklauf und der Vorlauftemperatur beeinflusst werden. Wird eine bestimmte Temperaturdifferenz überschritten oder die Vorlauftemperatur steigt über einen voreingestellten Wert, wird diese untere Grenze angehoben und beeinflusst damit die Regelung direkt, da damit auch der variable Faktor verändert wird.

### Einsatzmöglichkeiten

Wie bereits in den vorangegangenen Beschreibungen zu ersehen ist, ist dieses Pumpen und Ventil System sehr universell einsetzbar. Eine komplette Beschreibung aller Möglichkeiten des Einsatzes, sprengt die hier vorhandenen Dokumentgrenzen. Deshalb wurde auch nur die Verwendung für eine energieeffiziente Regelung von thermosolaren Anlagen vorrangig beschrieben und andere Einsatzfälle im laufe der Beschreibung bereits erwähnt. Über diese Anwendung hinaus sind Regelungssysteme in der Klimatisierung, Heizung und anderen industriellen Systemen möglich und denkbar. Die einzigste Einsatzbegrenzung liegt, wie bereits weiter oben erwähnt, nur darin, dass ausschließlich fließfähige Medien verwendet werden können.

### Legende für Bilder

### Legende Bild 1:

1 Anschlussfitting für Vorlauf
2 Absperrventil handbetätigt
3 Temperatursensor Vorlauf
4 Drucksensor Vorlauf
5 Synchronpumpe
6 Motorventil (Solarventil)
7 Anschlussfitting Vorlauf zu den Speichern
8 Anschlussfitting Rücklauf von den Speichern
9 Temperatursensor Rücklauf
10 Rückschlagventil
11 Spülarmatur
11.1 Trennventil Rücklauf
11.2 Absperrventil Eingang
11.3 Absperrventil Ausgang
12 Anschlussfitting Ausgang
13 Anschlussfitting Eingang
14 Flowsensor
15 Drucksensor Rücklauf
16 Absperrventil Rücklauf
17 Anschlussfitting Rücklauf
18 Regelelektronik
19 Netzleitung (230Vac)
20 Anschluss Temperatursensor Boiler
21 Universaleingang
22 Anschluss Ventil 2
23 Kommunikation zu Synchronpumpe 41
24 RS485 - Schnittstelle
25 Vorlaufleitung vom Dach
26 Rücklaufleitung zum Dach
27 Vorlaufleitung zum Speicher
28 Rücklaufleitung vom Speicher
29 Eingangsleitung zum Spülen
30 Ausgangsleitung zum Spülen

### Legende Bild 2:

31 Anschlussfitting Vorlauf von Solargruppe
32 Absperrventil Vorlauf
33 Motorventil angesteuert
34 Anschlussfitting zum Speicher
35 Anschlussfitting vom Speicher
36 Anschlussfitting Vorlauf zu nachfolgenden Speichern
37 Anschlussfitting Rücklauf von nachfolgenden Speichern
38 Spülarmatur
38.1 Trennventil Rücklauf
38.2 Absperrventil Eingang
38.3 Absperrventil Ausgang
39 Anschlussfitting Ausgang
40 Anschlussfitting Eingang
41 Synchronpumpe
42 Absperrventil Rücklauf
43 Anschlussfitting Rücklauf zur Solargruppe
44 Rückschlagventil
45 Temperatursensor (optional)
46 Regelelektronik
47 Vorlaufleitung von Solargruppe
48 Steuerleitung Ventil von Solargruppe
49 Kommunikation von Synchronpumpe (5)
50 Netzleitung (230Vac) von Solargruppe
51 Anschluss Temperatursensor Rücklauf an Regelelektronik (18) oder (46) (optional)
52 Rücklaufleitung zur Solargruppe
53 Vorlaufleitung zum Speicher
54 Rücklaufleitung vom Speicher
55 Vorlauf zu nachfolgenden Speichern
56 RS485 - Schnittstelle
57 Rücklaufleitung von nachfolgenden Speichern
58 Ausgangsleitung zum Spülen
59 Eingangsleitung zum Spülen

### Legende Bild 3:

60 Motorventil angesteuert
61 Anschlussfitting zum Speicher
62 Anschlussfitting vom Speicher
63 Steuerleitung von Regelelektronik
64 Leitung Vorlauf zum Speicher
65 Leitung Rücklauf vom Speicher
66 Vorlaufleitung
67 Vorlaufleitung zu nachfolgenden Speicher

### Legende Bild 4:

68 Motorventil autark
69 Anschlussfitting zum Speicher
70 Anschlussfitting vom Speicher
71 Temperatursensor Speicher bzw. Rücklauf
72 Temperatursensor Vorlauf
73 Versorgungsspannung Ventil
74 Leitung Vorlauf zum Speicher
75 Leitung Rücklauf vom Speicher
76 Vorlaufleitung zu nachfolgenden Speicher
77 Vorlaufleitung
IT EP 1 437 819 A1 A (ASKOLL HOLDING S.R.L 36031 POVOLARO DI DUEVLLE (VICENZA)) 14.07.2004
IT WO 2009/001291 A (ASKOLL P) 24.06.2007
AT AT 410 988 B B (SCHMIEDBAUER-WENIG HELMUT ING. A-8020 GRAZ, STEIERMARK (AT)) 25.09.2003

## Patentansprüche

1. Verfahren zur effektiven Regelung von Thermosolaranlagen zur Maximierung der solaren Erträge und einem energieeffizienten Betrieb der Anlage, mit mindestens einer motorgetriebenen Pumpe (5,41), mehreren Temperatursensoren (3,9,45), sowie ein Flowsensor (14), ein als Umschalt- oder Mischventil arbeitendes Motorventil (6), ein Rückschlagventil (10) und eine Verbindungsleitung (78) zwischen der Vorlaufleitung (25,27) und der Rücklaufleitung (26,28) zur Trennung des Systems in zwei Funktionskreise, **dadurch gekennzeichnet, dass**
- die motorgetriebenen Pumpen (5,41) von Synchronmotoren mit integrierter oder externer Regelelektronik (18) als aktives Regelglied angetrieben werden; wobei
- die Regelelektronik (18) einen integrierten Wärmemengenmesser mit den Temperatursensoren (3, 9) und dem Flowsensor (14) unter Berücksichtigung der spezifischen Wärmemenge eines Glykolanteils im Trägermedium verwendet; wobei
- die Wärmemenge als Regelgröße für das aktive Regelungsglied verwendet wird; und
- das als Umschalt- oder Mischventil arbeitende Motorventil (6) als 3-Wegeventil ausgebildet ist; und
- das Rückschlagventil (10,44) in der Rücklaufleitung (26-28) angeordnet wird; und
- der Flowsensor (14) in der Rücklaufleitung (26-28) angeordnet wird; und
- ein Drucksensor (4) in der Vorlaufleitung (25-27) und ein Drucksensor (15) in der Rücklaufleitung (26-28) angeordnet wird; und
- die Verbindungsleitung (78,78')zwischen dem Motorventil (6) und dem Rückschlagventil (10, 44) angeordnet wird.

2. Verfahren nach Anspruch 1, **gekennzeichnet dadurch, dass** die mindestens eine Pumpe (5) als Masterpumpe und zur Feinregulierung verwendet wird.

3. Verfahren nach Anspruch 2, **gekennzeichnet dadurch, dass** mindestens eine Pumpe (5,41) als Slave-Pumpe zur Erweiterung des Leistungsbereiches der Master-Pumpe (5) und zur Speicherverwaltung eingesetzt wird, wobei die Slave-Pumpe ihre Anweisungen durch die Master-Pumpe (5) erhalten; und bei der aktiven Ertragsregulierung zur Vorregelung bzw. Grobregulierung verwendet werden; und im Bereitschaftsbetrieb diese Pumpen eigenständig arbeiten.

4. Verfahren nach Anspruch 1, **gekennzeichnet durch** die Verwendung von Absolutdrucksensoren als Vorlaufdrucksensor (4) und Rücklaufdrucksensor (15) zur Anlagenüberwachung, Fehlerdetektierung und als Signalisierung zum Starten der Regelung.

5. Verfahren nach Anspruch 1, **gekennzeichnet durch** die Verwendung eines Universaleinganges, gebildet durch die elektrische Eingangsleitung (20), zum Anschluss von einem aktiven Temperatursensor als Sensor im Kollektor oder im Absorber oder als Außentemperatursensor oder als optischer Sensor am Dach oder als digitaler Eingang zum Fremdstart der Regelung.

6. Verfahren nach Anspruch 1, **gekennzeichnet durch** die Verwendung von autark arbeitenden Umschalt-oder Mischerventilen (6,41) zur schnellen und flexiblen Erweiterung von Speichern ohne zusätzliche Regel-oder Steuerelektronik und ohne Zwang zur lokalen Nähe zur Steuer-bzw. Regeleinrichtung und damit zur Minimierung vom benötigten Arbeitsaufwand.

7. Verfahren nach Anspruch 1, **gekennzeichnet durch** die Verwendung des Systems als Kleinanlage mit einer kleinen Solarfläche zur Warmwasserbereitung mit nur einem Boiler, sowie von Großanlagen mit mittleren bis sehr großen Solarflächen und mit mehreren Speichern zur Warmwasserbereitung, Heizung Unterstützung und Gewinnung von Prozesswärme.

8. Verfahren nach Anspruch 1, **gekennzeichnet durch** die Möglichkeit der Parallelschaltung von Solargruppen für gleich oder unterschiedlich ausgerichtete Solarflächen ohne Beeinflussung der jeweiligen Regelungsfunktionen und der Parallelschaltung der Speichergruppen für dasselbe oder unterschiedliche Speichersystem(e).

9. Verfahren nach Anspruch 1, **gekennzeichnet durch** die Verwendbarkeit der Synchronpumpe (5) mit externer oder integrierter Regelelektronik (18), mit geringfügig geänderten Softwarefunktionen, in Verbindung mit angesteuerten und autark arbeitenden Mischerventilen als intelligente und effiziente Heizung-und Klimatisierungssysteme sowie als energieeffiziente Umwälzpumpe für Heizungs-, Klimatisierungs- und Warmwasserkreisläufe mit gleichzeitig nutzbarer Funktion als Wärmekostenverteiler beim Einsatz in Mehrfamilienhäusern.

10. Regelungssystem zur effektiven Regelung von Thermosolaranlagen zur Maximierung der solaren Erträge und einem energieeffizienten Betrieb der Anlage, mit mindestens einer motorgetriebenen Pumpe (5,41), mehreren Temperatursensoren (3,9,45), sowie einem Flowsensor (14), einem als Umschalt-oder Mischventil arbeitenden Motorventil (6), einem Rückschlagventil (10) und einer Verbindungsleitung (78) zwischen der Vorlaufleitung (25-27) und der Rücklaufleitung (26-28) zur Trennung des Systems in zwei Funktionskreise, **dadurch gekennzeichnet, dass**
- die motorgetriebenen Pumpen (5,41) von Synchronmotoren mit integrierter oder externer Regelelektronik (18) als aktives Regelglied angetrieben werden; wobei
- die Regelelektronik (18) einen integrierten Wärmemengenmesser mit den Temperatursensoren (3, 9) und dem Flowsensor (14) aufweist und der Möglichkeit zur Berücksichtigung eines Glykolanteils im Trägermedium, der als spezifische Wärmekapazität des Gemisches des Trägermediums in der Regelelektronik (18) als Basis für die Systemregelung hinterlegt werden kann; wobei
- die Wärmemenge als Regelgröße für das aktive Regelglied verwendet wird; und
- das als Umschalt- oder Mischventil arbeitende Motorventil (6) als 3-Wegeventil ausgebildet ist; und
- das Rückschlagventil (10,44) in der Rücklaufleitung (26-28) angeordnet ist; und
- der Flowsensor (14) in der Rücklaufleitung (26-28) angeordnet ist; und
- ein Drucksensor (4) in der Vorlaufleitung (25-27) und ein Drucksensor (15) in der Rücklaufleitung (26-28) angeordnet ist; und
- die Verbindungsleitung (78,78') zwischen dem Mehrwegeventil (6) und dem Rückschlagventil (10,44) angeordnet ist.

11. Regelungssystem nach Anspruch 10, **dadurch gekennzeichnet, dass** das motorgetriebene Umschalt- oder Mischerventil (6) drei hydraulische Anschlüsse aufweist.

## Claims

1. A method for the effective regulation of thermosolar systems for maximizing solar yields and energy-efficient operation of the installation, comprising at least one motor-driven pump (5,41), a plurality of temperature sensors (3,9,45), and a flow sensor (14) a motor driven valve (6) operating as a change-over or mixing valve, a check valve (10) and a connecting line (78) between the feed line (25, 27) and the return line (26, 28) for separating the system into two operating circuits, **characterized in that**
- the motor-driven pumps (5, 41) with integrated or external control electronics (18) are driven as active control elements by synchronous motors; in which
- the control electronics (18) using an integrated heat quantity meter with the temperature sensors (3, 9) and the flow sensor (14), taking into account the specific heat quantity of a glycol fraction in the carrier medium; in which
- the heat quantity is used as a control variable for the active control element; and the engine valve (6) operating as a change-over or mixing valve is designed as a three-way valve; and
- the check valve (10,44) is arranged in the return line (26-28); and
- the flow sensor (14) is arranged in the return line (26-28); and
- a pressure sensor (4) is arranged in the flow line (25-27) and a pressure sensor (15) is arranged in the return line (26-28); and
- the connecting line (78, 78 ') is arranged between the motor valve (6) and the check valve (10, 44).

2. Method according to claim 1, **characterized in that** the at least one pump (5) is used as a master pump and for fine regulation.

3. The method as claimed in claim 2, **characterized in that** at least one pump (5,41) is used as a slave pump for expanding the power range of the master pump (5) and for reservoir management, wherein the slave pump transmits its instructions through the master pump (5); and in the case of active income regulation for pre-regulation or large-scale regulation; and in stand-by mode these pumps operate independently.

4. The method according to claim 1, further comprising the use of absolute pressure sensors as a feed pressure sensor (4) and a return pressure sensor (15) for system monitoring, fault detection and as signaling for starting the control.

5. The method as claimed in claim 1, **characterized by** the use of a universal input, formed by the electrical input line (20), for the connection of an active temperature sensor as sensor in the collector or in the absorber or as an external temperature sensor or as an optical sensor on the roof or as a digital input for the external start of the scheme.

6. The method as claimed in claim 1, wherein the use of independently operating change-over or mixing valves (6,41) for the rapid and flexible expansion of memories without additional control or control electronics and without the need for local proximity to the control or control unit, and thus to minimize the work required.

7. The method according to claim 1, further comprising the use of the system as a small installation with a small solar surface for hot water heating with only one boiler, as well as large systems with medium to very large solar surfaces and with several storage tanks for hot water preparation, heating support and process heat recovery.

8. The method as claimed in claim 1, wherein the possibility of parallel connection of solar groups for identical or differently oriented solar surfaces without influencing the respective control functions and the parallel connection of the storage groups for the same or different storage system (s).

9. The method as claimed in claim 1, **characterized by** the use of the synchronous pump (5) with external or integrated control electronics (18), with slightly modified software functions, in conjunction with controlled and self-operating mixer valves as intelligent and efficient heating and air-conditioning systems, and as energy-efficient circulating pump for Heating, air-conditioning and hot water circuits with simultaneously usable function as heat cost allocator for use in multi-family houses.

10. A control system for the effective regulation of thermosolar systems for maximizing solar yields and energy-efficient operation of the installation, comprising at least one motor-driven pump (5,41), a plurality of temperature sensors (3,9,45), and a flow sensor (14), a motor driven valve (6) operating as a change-over or mixing valve, a check valve (10) and a connecting line (78) between the feed line (25, 27) and the return line (26, 28) for separating the system into two operating functional circuits, **characterized in that** the control valve (6) that
- the motor-driven pumps (5, 41) of synchronous motors with integrated or external control electronics (18) are driven as active control elements; in which
- the control electronics (18) has an integrated heat quantity meter with the temperature sensors (3,9) and the flow sensor (14), and the possibility of taking into account a glycol portion in the carrier medium as a specific heat capacity of the mixture of the carrier medium in the control electronics (18) for system regulation; in which
- the heat quantity is used as the control variable for the active control element; and
- the engine valve (6) operating as a change-over or mixing valve is designed as a three-way valve; and
- the check valve (10,44) is arranged in the return line (26-28); and
- the flow sensor (14) is arranged in the return line (26-28); and
- a pressure sensor (4) is arranged in the flow line (25-27) and a pressure sensor (15) is arranged in the return line (26-28); and
- the connecting line (78, 78 ') is arranged between the multi-way valve (6) and the check valve (10, 44).

11. Control system according to claim 10, **characterized in that** the motor-driven changeover or mixing valve (6) has three hydraulic connections.

## Revendications

1. Procédé pour la régulation efficace des systèmes thermosolaires pour maximiser les rendements solaires et le fonctionnement économe en énergie de l'installation, comprenant au moins une pompe à moteur (5, 41), une pluralité de capteurs de température (3, 9,45) et un capteur de débit (14), une soupape de moteur (6) fonctionnant comme un changement ou une vanne mélangeuse, un clapet anti-retour (10) et une ligne de connexion (78) entre la ligne pré-écoulement (25, 27) et la ligne de retour (26, 28) pour séparer le système en deux circuits fonctionnels, **caractérisé en ce que**
- les pompes à moteur (5, 41) de moteurs synchrones avec électronique de commande intégrée ou externe (18) sont entraînées en tant qu'éléments de commande actifs; dans lequel
- l'électronique de commande (18) utilise un compteur de quantité de chaleur intégré avec les capteurs de température (3, 9) et le capteur de débit (14) en tenant compte de la quantité de chaleur spécifique d'une fraction de glycol dans le milieu de support; dans lequel
- la quantité de chaleur est utilisée comme variable de contrôle pour l'élément de contrôle actif; et
- la vanne du moteur (6) fonctionnant comme un changement ou une vanne mélangeuse est conçue comme une vanne à trois voies; et
- le clapet anti-retour (10,44) est disposé dans la ligne de retour (26-28); et
- le capteur de débit (14) est disposé dans la ligne de retour (26-28); et
- un capteur de pression (4) est disposé dans la ligne d'écoulement (25-27) et un capteur de pression (15) est agencé dans la ligne de retour (26-28); et
- la ligne de raccordement (78, 78 ') est disposée entre la soupape du moteur (6) et le clapet anti-retour (10, 44).

2. Procédé selon la revendication 1, **caractérisé en ce que** l'au moins une pompe (5) est utilisée comme pompe principale et pour une régulation fine.

3. Procédé selon la revendication 2, **caractérisé en ce qu'**au moins une pompe (5, 41) est utilisée comme pompe esclave pour étendre la plage de puissance au moins une pompe (5) en tant que pompe principale (5) et pour la gestion d' un reservoir, dans lequel la pompe esclave transmet ses instructions à travers la pompe principale Pompe (5); et dans le cas de la réglementation active du revenu pour la pré-réglementation ou la réglementation à grande échelle; et en mode veille, ces pompes fonctionnent indépendamment.

4. Procédé selon la revendication 1, **comprenant en outre** l'utilisation de capteurs de pression absolue comme capteur de pression d'alimentation (4) et un capteur de pression de retour (15) pour la surveillance du système, la détection de défauts et comme signalisation pour le démarrage de la commande.

5. Procédé selon la revendication 1, **caractérisé par** l'utilisation d'une entrée universelle, formée par la ligne d'entrée électrique (20), pour la connexion d'un capteur de température actif comme capteur dans le collecteur ou dans l'absorbeur ou comme capteur de température externe ou comme capteur optique sur le toit ou comme entrée numérique pour le démarrage externe du réglage.

6. Procédé selon la revendication 1, **dans lequel** l'utilisation de vannes de commutation ou de mélange autonomes (6, 41) pour l'expansion rapide et souple de reservoir sans électronique de commande ou de commande supplémentaire et sans besoin de proximité locale de l'unité de commande ou de commande, respectivement dispositif de commande et ainsi minimiser le travail requis.

7. Procédé selon la revendication 1, **comprenant en outre** l'utilisation du système comme une petite installation avec une petite surface solaire pour le chauffage d'eau chaude avec une seule chaudière, ainsi que de grandes plantes avec des surfaces solaires moyennes à très grandes et avec plusieurs réservoirs de stockage pour la préparation d'eau chaude, le support de chauffage et la récupération de chaleur de procédé.

8. Procédé selon la revendication 1, **comprenant en outre** la possibilité d'une connexion parallèle de groupes solaires pour des surfaces solaires d'une même orientation ou d'une orientation différente sans influencer les fonctions de commande respectives et la connexion en parallèle des groupes de stockage pour le (s) même (s) système (s) de stockage identique ou différent.

9. Procédé selon la revendication 1, **caractérisé par** l'utilisation de la pompe synchrone (5) avec une électronique de commande externe ou intégrée (18), avec des fonctions logicielles légèrement modifiées, en combinaison avec des vannes mélangeuses commandées et autonomes, comme systèmes de chauffage et de climatisation intelligents et efficaces et comme pompe de circulation économe en énergie pour Chauffage, climatisation et circuits d'eau chaude avec fonction utilisable simultanément comme répartiteur de coûts de chaleur pour les maisons multifamiliales.

10. Système de commande pour la régulation efficace des systèmes thermosolaires pour maximiser les rendements solaires et un fonctionnement économe en énergie de l'installation, comprenant au moins une pompe à moteur (5, 41), une pluralité de capteurs de température (3, 9, 45) et un capteur de débit (14), une soupape de moteur (6) fonctionnant comme un changement ou une vanne mélangeuse, un clapet anti-retour (10) et une ligne de connexion (78) entre la ligne pré-écoulement (25, 27) et la ligne de retour (26, 28) pour séparer le système en deux circuits fonctionnels, **caractérisé en ce que**
- les pompes à moteur (5,41) de moteurs synchrones avec électronique de commande intégrée ou externe (18) sont entraînées en tant qu'éléments de commande actifs; dans lequel
- l'électronique de commande (18) a un compteur de quantité de chaleur intégré avec les capteurs de température (3, 9) et le capteur de débit (14) et la possibilité de rendre en compte un composant glycol dans le milieu support comme capacité calorifique spécifique du mélange du support dans l'électronique de commande (18) pour la régulation du système; dans lequel
- la quantité de chaleur est utilisée comme variable de contrôle pour l'élément de contrôle actif; et
- la vanne du moteur (6) fonctionnant comme un changement ou une vanne mélangeuse est conçue comme une vanne à trois voies; et
- le clapet anti-retour (10, 44) est disposé dans la ligne de retour (26-28); et
- le capteur de débit (14) est disposé dans la ligne de retour (26-28); et
- un capteur de pression (4) est disposé dans la ligne d'écoulement (25-27) et un capteur de pression (15) est agencé dans la ligne de retour (26-28); et
- la ligne de raccordement (78, 78') est disposée entre la vanne multi-voies (6) et le clapet anti-retour (10, 44).

11. Système de commande selon la revendication 10, **caractérisé en ce que** la vanne de changement de moteur ou la vanne mélangeuse (6) ont trois connexions hydrauliques.
